# EUROPEAN PATENT SPECIFICATION

(11) **EP 4 102 823 B1**
(45) Date of publication and mention of the grant of the patent: **18.11.2026**
(21) Application number: 21764733.8
(22) Date of filing: 05.02.2021
(51) Int. Cl.: H04N 23/10, H04N 23/17, H04N 23/20, H04N 23/30, H04N 23/95, H04N 23/13, H04N 23/63, H04N 23/60, G01S 13/88, G01S 13/86, G01S 13/06, G06V 10/58, G01C 11/02, G06T 7/55

(54) **NOT-LINE-OF-SIGHT OBJECT IMAGING METHOD, AND ELECTRONIC DEVICE**
NICHT-SICHTLINIEN-OBJEKTABBILDUNGSVERFAHREN UND ELEKTRONISCHE VORRICHTUNG
PROCÉDÉ D'IMAGERIE D'OBJET HORS LIGNE DE VISÉE, ET DISPOSITIF ÉLECTRONIQUE

(30) Priority: 06.03.2020 CN 202010153540
(43) Date of publication of application: 14.12.2022
(73) Proprietor: Huawei Technologies Co., Ltd., Shenzhen, Guangdong 518129, (CN)
(72) Inventor: YU, Ziming, Shenzhen, Guangdong 518129 (CN); ZENG, Kun, Shenzhen, Guangdong 518129 (CN); WANG, Guangjian, Shenzhen, Guangdong 518129 (CN); HE, Jia, Shenzhen, Guangdong 518129 (CN)
(74) Representative: Gill Jennings & Every LLP
(86) International application number: PCT/CN2021/075658
(87) International publication number: WO 2021/175097

(56) References cited:
- CN-A- 102 506 757
- CN-A- 109 785 381
- CN-U- 205 539 666
- CN-U- 210 006 190
- CN-Y- 201 322 681
- US-A1- 2003 202 691
- US-A1- 2010 109 680
- US-A1- 2011 102 234
- US-A1- 2013 194 127
- US-A1- 2014 168 007
- US-A1- 2017 285 164
- US-A1- 2018 038 981

## Description

### CROSS-REFERENCE TO RELATED APPLICATIONS

This application claims priority to Chinese Patent Application No. 202010153540.9, filed with the China National Intellectual Property Administration on March 6, 2020 and entitled "NON-LINE-OF-SIGHT OBJECT IMAGING METHOD AND ELECTRONIC DEVICE".

### TECHNICAL FIELD

This application relates to the field of terminal technologies, and in particular, to a non-line-of-sight object imaging method and an electronic device.

### BACKGROUND

Because an electromagnetic wave can penetrate a part of a surface of an object, the electromagnetic wave is usually used to detect an internal structure of the object or detect a non-line-of-sight (non-line-of-sight, NLOS) object, and image the object. Therefore, the electromagnetic wave may be widely applied to technical fields such as medicine and security check. An imaging principle of the electromagnetic wave is to actively or passively detect a target imaging object, for example, reconstruct a shape and a feature of an object, to form an image.

A larger quantity of antenna array elements indicates a narrower beam of an electromagnetic wave that can be implemented and a wider beam scanning range that can be controlled. Therefore, to meet a requirement for a wide beam scanning range, an existing electromagnetic imaging apparatus (for example, a computed tomography (computed tomography, CT) scanner or a security check device) has a large size, and cannot meet the requirements in a plurality of application scenarios.

US 2018/0038981 A1 discloses a method and apparatus for blending and display of radio frequency in-wall imagery. In the method and apparatus, an RF sensor assembly receives an RF signal for capturing an RF image of one or more objects including an electricity-bearing object disposed in a space behind a surface, a voltage sensor detects a presence of the electricity-bearing object disposed in the space behind the surface and a processor determines the RF image based on the data representing the RF signal, identifies a position of the electricity-bearing object in the RF image based on the data indicating the presence of the electricity-bearing object and a relative position of the sensory field to the RF sensor assembly and generates, based on the RF image, a composite image in which the electricity-bearing object is marked.

US 2014/0168007 A1 discloses a method for generating an image including taking a first active radar image of an object from a first position with a handheld screening device; taking a second active radar image of the object from a second position with the handheld screening device; and generating a third image based on the first active radar image and the second active radar image.

US 2011/0102234 A1 discloses a standoff range, sense-through-obstruction radar system.

US 2013/0194127 A1 discloses a vehicle collision risk prediction apparatus.

US 2017/0285164A1 discloses a notification device of an approaching vehicle.

### SUMMARY

This application provides a non-line-of-sight object imaging method and an electronic device, to implement imaging of a non-line-of-sight object in a plurality of application scenarios.

According to a first aspect, an embodiment of this application provides a non-line-of-sight object imaging method, applied to an electronic device, as specified in independent claim 1. The electronic device includes a first component and a second component. The method includes: detecting a trigger signal; in response to the trigger signal, obtaining first data collected by the first component, and obtaining second data collected by the second component, where the first data includes an electromagnetic signal collected by the first component, and the second data includes image information collected by the second component and/or movement information of the electronic device; and matching the first data and the second data, and generating electromagnetic image data of a non-line-of-sight object based on a matching result.

Because the first component can collect the electromagnetic signal, when imaging the non-line-of-sight object, the electronic device can be moved. Movement of the electronic device, that is, movement of the first component, is equivalent to expanding a beam scanning range of the electronic device, thereby improving imaging resolution of electromagnetic imaging. In addition, this can be implemented by using a small-sized electronic device. Therefore, the electronic device is easy to carry, and can be used for imaging of the non-line-of-sight object in a plurality of application scenarios.

In a possible design, the first component includes an antenna.

It should be understood that the first component is the antenna. Moving the mobile electronic device may be considered as forming a large virtual antenna array, to implement a wide beam scanning range.

In a possible design, the second component includes at least one of an optical camera, a motion sensor, a laser radar, and a millimeter-wave radar.

In the claimed design, the matching the first data and the second data includes:
obtaining N pieces of first sampled data included in the first data, and obtaining M pieces of second sampled data included in the second data, where N is a positive integer, and M is a positive integer; and
matching the first sampled data and the second sampled data that are at a same collection moment.

It should be understood that a sampling moment of each piece of second data corresponds to one physical spatial location, the physical spatial location also corresponds to one piece of first data, and the first data may represent an electromagnetic image of the non-line-of-sight object. Therefore, matching the N pieces of first sampled data and the M pieces of second sampled data is matching the first sampled data and the second sampled data that are at the same collection moment, to obtain the electromagnetic image of the non-line-of-sight object.

In a possible design, the method further includes:
extracting a part or all of the second data from the M pieces of second sampled data;
separately calculating location coordinates of any two pieces of adjacent second data in the part or all of the second data in a first reference coordinate system of the second component, to obtain a first motion track of the electronic device; and
mapping the first motion track from the first reference coordinate system to a second reference coordinate system of the electronic device, to obtain a second motion track.

The first data and the second data correspond to each other at a same physical spatial location, but reference coordinates of the electronic device and the second component may be different. Therefore, the first motion track obtained by using the reference coordinates of the second component is mapped to the second reference coordinates, to obtain an actual motion track of the electronic device.

In a possible design, the electromagnetic image includes material information. The material information indicates a material of the non-line-of-sight object. In this solution, the material information on the electromagnetic image may prompt a user of the material of the non-line-of-sight object, thereby improving user experience.

In a possible design, before the detecting a trigger signal, the method further includes: detecting a first operation; and starting the optical camera included in the electronic device in response to the first operation. It should be understood that, if the electronic device is, for example, a mobile phone, the first operation may be an operation of starting a camera application, and the optical camera is started by default when the camera application is started; or if the electronic device is, for example, another possible device, the first operation may be an operation of starting the electronic device, and the optical camera is started by default when the electronic device is started.

In the claimed design, after the detecting a trigger signal, the method further includes:
displaying auxiliary prompt information on a display interface, where the auxiliary prompt information includes a first scanning prompt pattern that is used to indicate a moving track to which the electronic device needs to refer when scanning the non-line-of-sight object. This solution helps the electronic device improve imaging performance of the non-line-of-sight object.

In a possible design, after the displaying auxiliary prompt information on a display interface, the method further includes: detecting a second operation; and displaying a second scanning prompt pattern on the display interface in response to the second operation. In this solution, a plurality of scanning prompt patterns are provided, and different scanning prompt patterns may correspond to different imaging performance. Therefore, the user may choose to use a scanning prompt pattern based on an actual requirement, thereby improving user experience.

To ensure the imaging performance of the non-line-of-sight object, the electronic device may determine, based on current motion information such as a moving speed and a moving direction, whether to prompt the user to move the electronic device on a specified path.

Specifically, as claimed, after the displaying auxiliary prompt information on a display interface, the method further includes:
obtaining a moving speed of the electronic device; and
if the moving speed is greater than a preset threshold, displaying first prompt information on the display interface, where the first prompt information is used by the user to move the electronic device at a speed less than the moving speed.

For another example, after the displaying auxiliary prompt information on a display interface, the method further includes:
if it is determined that the electronic device shakes in a movement process, displaying second prompt information on the display interface, where the second prompt information prompts the user to move the electronic device in a specified direction.

According to a second aspect, an embodiment of this application provides an electronic device as specified in appended claim 8, including a processor, a first component, and a second component.

The processor is configured to detect a trigger signal.

The processor is configured to: in response to the trigger signal, obtain first data collected by the first component, and obtain second data collected by the second component. The first data includes an electromagnetic signal collected by the first component. The second data includes image information collected by the second component and/or movement information of the electronic device.

The first component is configured to collect the first data.

The second component is configured to collect the second data.

The processor is further configured to match N pieces of first sampled data and M pieces of second sampled data, and generate electromagnetic image data of a non-line-of-sight object based on a matching result.

In a possible design, the first component includes an antenna.

In a possible design, the second component includes at least one of an optical camera, a motion sensor, a laser radar, and a millimeter-wave radar.

In the claimed design, the processor is specifically configured to:
obtain N pieces of first sampled data included in the first data, and obtain M pieces of second sampled data included in the second data, where N is a positive integer, and M is a positive integer; and
match the first sampled data and the second sampled data that are at a same collection moment.

In a possible design, the processor is further configured to:
obtain a part or all of the second data from the M pieces of second sampled data;
separately calculate location coordinates of any two pieces of adjacent second data in the part or all of the second data in a first reference coordinate system of the second component, to obtain a first motion track of the electronic device; and
map the first motion track from the first reference coordinate system to a second reference coordinate system of the electronic device, to obtain a second motion track.

In a possible design, the electromagnetic image includes material information. The material information indicates a material of the non-line-of-sight object.

In a possible design, before detecting the trigger signal, the processor is further configured to:
detect a first operation; and
start the optical camera included in the electronic device in response to the first operation.

In the claimed design, the electronic device further includes a display. The display is configured to: after the processor detects the trigger signal, display auxiliary prompt information on a display interface of the display. The auxiliary prompt information includes a first scanning prompt pattern that is used to indicate a moving track to which the electronic device needs to refer when scanning the non-line-of-sight object.

In a possible design, after displaying the auxiliary prompt information on the display interface of the display, the processor is further configured to:
detect a second operation; and
display a second scanning prompt pattern on the display interface in response to the second operation.

In the claimed
design, after displaying the auxiliary prompt information on the display interface of the display, the processor is further configured to:
obtain a moving speed of the electronic device. If the moving speed is greater than a preset threshold, the display interface displays first prompt information. The first prompt information is used by a user to move the electronic device at a speed less than the moving speed.

In a possible design, after displaying the auxiliary prompt information on the display interface of the display, the processor is further configured to:
if it is determined that the electronic device shakes in a movement process, display second prompt information on the display interface. The second prompt information prompts the user to move the electronic device in a specified direction.

In a possible design, the display is further configured to:
receive the electromagnetic image data of the non-line-of-sight object output by the processor, and display an electromagnetic image of the non-line-of-sight object based on the electromagnetic image data.

For technical effect brought by any one of the second aspect and the possible design manners of the second aspect, refer to technical effect brought by any one of the first aspect and the possible design manners of the first aspect. Details are not described herein again.

According to a non-claimed third aspect, an embodiment of this application further provides a circuit system. The circuit system may be one or more chips, for example, a system-on-a-chip (system-on-a-chip, SoC). The circuit system includes at least one processing circuit, configured to:
obtain first data collected by a first component in an electronic device, and obtain second data collected by a second component in the electronic device, where the first data includes an electromagnetic signal collected by the first component, and the second data includes image information collected by the second component and/or movement information of the electronic device; and
match the first data and the second data, and generate electromagnetic image data of a non-line-of-sight object based on a matching result.

In a possible design, the at least one processing circuit is specifically configured to:
obtain N pieces of first sampled data included in the first data, and obtain M pieces of second sampled data included in the second data, where N is a positive integer, and M is a positive integer; and
match the first sampled data and the second sampled data that are at a same collection moment.

In a possible design, the at least one processor is further configured to:
obtain a part or all of the first data from the M pieces of first data;
separately calculate location coordinates of any two pieces of adjacent first data in the part or all of the first data in a first reference coordinate system of the second component, to obtain a first motion track of the electronic device; and
map the first motion track from the first reference coordinate system to a second reference coordinate system of the electronic device, to obtain a second motion track.

In a possible design, the electromagnetic image includes material information. The material information indicates a material of the non-line-of-sight object.

For technical effect brought by any one of the third aspect and the possible design manners of the third aspect, refer to technical effect brought by any one of the first aspect and the possible design manners of the first aspect. Details are not described herein again.

According to a non-claimed fourth aspect, an embodiment of this application further provides an electronic device The electronic device includes a display, an optical camera, an electromagnetic sensor, one or more processors, a memory, and one or more programs. The one or more programs are stored in the memory. The one or more programs include instructions. When the instructions are executed by the electronic device, the electronic device is enabled to perform the steps of the method according to any one of the first aspect.

According to a non-claimed fifth aspect, an embodiment of this application further provides an electronic device. The electronic device may include modules/units that perform the method according to any one of the first aspect and the possible designs of the first aspect. These modules/units may be implemented by hardware, or may be implemented by hardware by executing corresponding software.

According to a non-claimed sixth aspect, an embodiment of this application further provides a chip. The chip is coupled to a memory in an electronic device. Therefore, when the chip runs, program instructions stored in the memory are invoked to implement the method according to any one of the first aspect or the possible designs of the first aspect in embodiments of this application.

According to a seventh aspect, an embodiment of this application further provides a computer-readable storage medium. The computer-readable storage medium includes a program. When the program runs on an electronic device, the electronic device is enabled to perform the method according to any one of the first aspect or the possible designs of the first aspect.

According to a non-claimed eighth aspect, an embodiment of this application further provides a program product. When the program product runs on an electronic device, the electronic device is enabled to perform the method according to any one of the first aspect or the possible designs of the first aspect.

According to a non-claimed ninth aspect, an embodiment of this application further provides a user graphical interface on an electronic device. The electronic device includes a display, a camera, a memory, and one or more processors. The one or more processors are configured to execute one or more computer programs stored in the memory. The graphical user interface may include a user graphical interface displayed when the electronic device performs the method according to any one of the first aspect or the possible designs of the first aspect.

For technical effect brought by any one of the possible design manners of the fourth aspect to the ninth aspect, refer to technical effect brought by any one of the first aspect and the possible design manners of the first aspect. Details are not described herein again.

### BRIEF DESCRIPTION OF DRAWINGS

FIG. 1 is a schematic diagram of a structure of an electronic device according to an embodiment of this application;
FIG. 2 is an imaging scenario of a non-line-of-sight object according to an embodiment of this application;
FIG. 3 is another imaging scenario of a non-line-of-sight object according to an embodiment of this application;
FIG. 4 is a schematic flowchart of a non-line-of-sight object imaging method according to an embodiment of this application;
FIG. 5 is a schematic diagram of a camera interface of a mobile phone according to an embodiment of this application;
FIG. 6 is a schematic flowchart of photographing a non-line-of-sight object according to an embodiment of this application;
FIG. 7 is a schematic diagram of auxiliary prompt information according to an embodiment of this application;
FIG. 8 is another schematic diagram of auxiliary prompt information according to an embodiment of this application;
FIG. 9 is still another schematic diagram of auxiliary prompt information according to an embodiment of this application;
FIG. 10 is a yet another schematic diagram of auxiliary prompt information according to an embodiment of this application;
FIG. 11 is a schematic diagram of alignment between first data and second data according to an embodiment of this application;
FIG. 12 is a schematic diagram of a principle of restoring a motion track based on second data according to an embodiment of this application;
FIG. 13 is a schematic diagram of a principle of electromagnetic imaging according to an embodiment of this application;
FIG. 14 is a photographing scenario of a non-line-of-sight object according to an embodiment of this application;
FIG. 15 is a schematic diagram of a display interface of a mobile phone according to an embodiment of this application;
FIG. 16 is a schematic diagram of a structure of an electronic device according to an embodiment of this application; and
FIG. 17 is a schematic diagram of a structure of a circuit system according to an embodiment of this application.

### DESCRIPTION OF EMBODIMENTS

The following clearly and completely describes the technical solutions in embodiments of the present invention with reference to the accompanying drawings in embodiments of the present invention. It is clear that the described embodiments are merely some but not all of embodiments of the present invention. All other embodiments obtained by persons of ordinary skill in the art based on embodiments of the present invention without creative efforts shall fall within the protection scope of the present invention.

Electromagnetic wave imaging is an imaging means using an electromagnetic wave as an information carrier. Because an electromagnetic wave has a high frequency band, the electromagnetic wave can penetrate a part of a target imaging object, that is, implement perspective of an internal structure of the target imaging object. Therefore, electromagnetic wave imaging is usually used to detect an internal structure of an object or detect a non-line-of-sight object, and image the object, and may be widely applied to technical fields such as medicine and security check. It should be understood that the non-line-of-sight object herein refers to an object that is invisible to naked eyes or an object that is invisible to visible light, for example, an object blocked by an obstacle, for example, a wire hidden in a wall. Electromagnetic wave imaging is mainly to reconstruct a shape, a feature, or a dielectric constant distribution of the target imaging object by actively or passively detecting a signal of the target imaging object and a signal of a surrounding scattering field, so as to form an image. Electromagnetic wave imaging mainly includes two electromagnetic imaging manners: active electromagnetic imaging and passive electromagnetic imaging.
(1) Active electromagnetic imaging means that a transmitter in an imaging apparatus actively sends an electromagnetic wave to the target imaging object, the target imaging object reflects the received electromagnetic wave, and the reflected electromagnetic wave is received by a receiver in the imaging apparatus. In this specification, the transmitted electromagnetic wave is also referred to as an echo signal. The imaging apparatus processes the received echo signal, for example, extracts, from the echo signal, a target feature that is used to represent the target imaging object, for example, a feature that represents an outline of the target imaging object, and images the target imaging object based on the target feature.
(2) Passive electromagnetic imaging means that an imaging apparatus acquires, by using, for example, a receive antenna, electromagnetic radiation information in space in which the target imaging object is located, and performs imaging based on a difference between electromagnetic radiation intensities of different objects. Typical passive electromagnetic imaging is, for example, thermal imaging in an infrared band. Specifically, for example, radiation energy from the target imaging object may be collected, the collected radiation energy is converted into an electrical signal, and the electrical signal is processed, for example, processing such as development, fixation, and correction is performed on the electrical signal, and finally the processed signal is output, for example, output to a scanning printer, a television picture tube, a cathode-ray tube, and the like, to implement imaging of the target imaging object.

In electromagnetic wave imaging, an antenna aperture is in direct proportion to an imaging resolution, that is, satisfies: *ρ* ∝ *D,* where *ρ* is the imaging resolution, and D is the antenna aperture. Generally, an antenna exists in a form of an array, that is, a plurality of antennas form an antenna array in an array manner. Each antenna may also be considered as an antenna array element. A linear antenna array is used as an example. It is assumed that a wavelength of the electromagnetic wave is λ, the antenna array includes N antennas, and centers of the N antennas are arranged at equal intervals of λ/2, the antenna aperture D is equal to N*λ/2. To obtain a higher imaging resolution, the more antenna array elements, the better. In addition, a larger quantity of antenna array elements indicates a narrower beam of an electromagnetic wave that can be implemented and a wider beam scanning range that can be controlled. Therefore, to meet a requirement for a wide beam scanning range, an existing electromagnetic imaging apparatus (for example, a CT scanner or a security check device) has a large size, and cannot meet the requirements in a plurality of application scenarios. In contrast, a handheld device such as a mobile phone is limited by space, and a small quantity of antenna array elements may be installed. Therefore, an imaging resolution of electromagnetic imaging is low, that is, imaging performance is poor.

In view of this, embodiments of this application provide a non-line-of-sight object imaging method and an electronic device. The electronic device includes a first component that can collect an electromagnetic signal, or it may be understood that the first component can transmit and receive an electromagnetic signal. When a non-line-of-sight object is imaged, the electronic device may be moved. Due to movement of the electronic device, a wide beam scanning range can be implemented, and the imaging resolution of electromagnetic imaging can be improved. Therefore, imaging of the non-line-of-sight object in a plurality of application scenarios may be implemented by using a small-sized portable device. In addition, the method may be applied to, but is not limited to a portable device such as a mobile phone, for example, may be applied to a mobile device such as a vehicle, and is applied to target detection and tracking in autonomous driving.

Embodiments of this application may be applied to any electronic device having an electromagnetic imaging function, to perform the non-line-of-sight object imaging method provided in this embodiment of this application. The following describes a possible electronic device provided in this embodiment of this application and an embodiment of performing image imaging by using the electronic device.

In some embodiments of this application, the electronic device may be a terminal, such as a mobile phone, a tablet computer, a mobile computer, a vehicle-mounted device, or a mobile robot. The electronic device may detect the non-line-of-sight object. The non-line-of-sight object is detected by using the electromagnetic wave. From this perspective, the electronic device includes at least an antenna array, configured to send an electromagnetic wave signal and receive an electromagnetic wave signal, to detect the non-line-of-sight object. Because the electronic device includes an antenna used for communication, for ease of differentiation, an antenna array used to detect the non-line-of-sight object is referred to as the first component. Because the first component can send the electromagnetic wave signal and receive the electromagnetic wave signal, the first component may also be referred to as an electromagnetic sensor. This is used as an example below. It should be understood that the electromagnetic sensor may reuse the antenna used for communication in the electronic device, or may be independent of the antenna used for communication in the electronic device. This is not limited in this embodiment of this application. It should be noted that, in this specification, in addition to the antenna array, the electromagnetic sensor may further include a component such as a processing chip.

It should be understood that scanning, by the electronic device, the non-line-of-sight object relates to movement of the electronic device. Therefore, to determine motion information of the electronic device, the electronic device may include a second component, configured to determine the motion information of the electronic device. For example, the second component may include a motion sensor, such as an acceleration sensor, a posture sensor, and a gyroscope; or the second component may include an optical camera and the like, and is installed on an electronic device such as a mobile phone; or the second component may include an inertial measurement unit (inertial measurement unit, IMU), for example, an IMU including three uniaxial accelerometers and a gyroscope; or the second component may include an encoder, a wheel speedometer, and the like, and is installed in an electronic device such as a mobile robot; or the second component may include a laser radar, a millimeter-wave radar, and the like, and is installed in a vehicle-mounted device. The following uses an example in which the second component is the motion sensor.

In some other embodiments, the electronic device may further include an optical sensor. The optical sensor may include an optical camera and a necessary component such as a mechanical transmission apparatus. The electronic device may include a portable electronic device. An example embodiment of the portable electronic device includes but is not limited to a portable electronic device using iOS^{®}, Android^{®}, Microsoft^{®}, or another operating system such as linux^{®}. It should be understood that the portable electronic device may also be another portable electronic device, for example, a digital camera, a personal digital assistant (personal digital assistant, PDA), a media player, a smart television, a smart wearable device (such as a smartwatch, smart glasses, and a smart band), an e-reader, or a handheld game console, a point of sales (point of sales, POS), a vehicle-mounted electronic device (vehicle-mounted computer), and the like. It should be further understood that in some other embodiments of this application, the electronic device may not be a portable electronic device, but may be any device that includes at least an electromagnetic sensor and an optical camera, for example, a desktop computer or a mobile robot.

Generally, the electronic device may support a plurality of applications, for example, one or more of the following applications: a camera application, an instant messaging application, and a photo management application. There may be a plurality of instant messaging applications, for example, WeChat, Tencent chat software (QQ), WhatsApp Messenger, Line (Line), image sharing (instagram), KakaoTalk, and DingTalk. A user may send information such as text, voice, a picture, a video file, and various other files to another contact by using the instant messaging application, or the user may implement a video or audio call with another contact by using the instant messaging application.

The following describes, by using an example in which the electronic device is a mobile phone, a schematic diagram of a structure of the electronic device to which this embodiment of this application is applied.

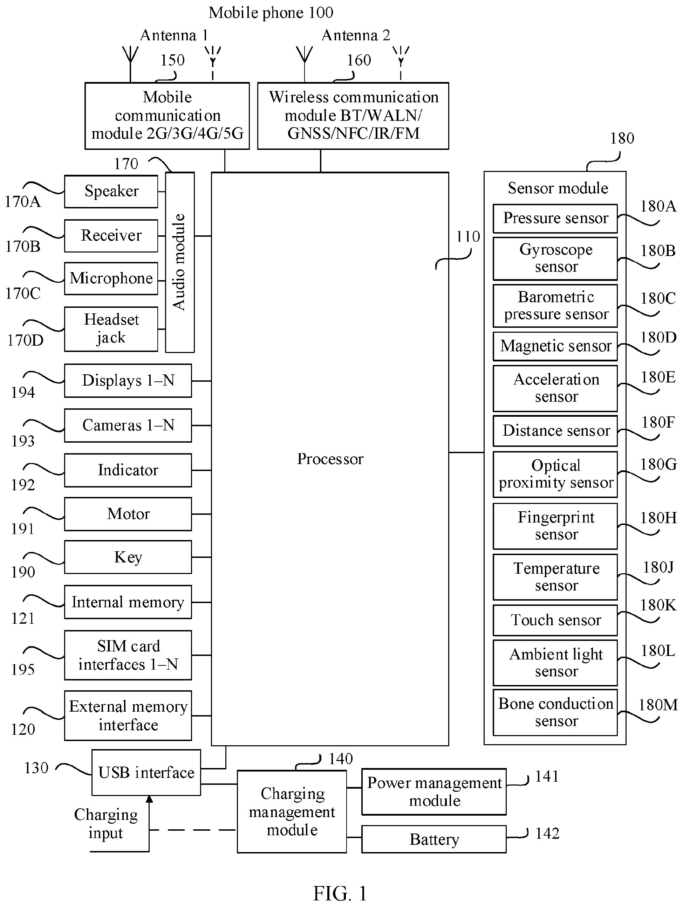

FIG. 1 is a schematic diagram of a structure of a mobile phone 100. The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an illustrated structure in this embodiment of the present invention does not constitute a specific limitation on the mobile phone 100. In other embodiments of this application, the mobile phone 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a Mini USB interface, a Micro USB interface, a USB type-C interface, or the like. The USB interface 130 may be configured to connect to a charger to charge the mobile phone 100, or may be configured to transmit data between the mobile phone 100 and a peripheral device, or may be configured to connect to a headset for playing audio through the headset. The interface may be further configured to connect to another electronic device such as an AR device.

It may be understood that an interface connection relationship between the modules shown in this embodiment of the present invention is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some wireless charging embodiments, the charging management module 140 may receive a wireless charging input by using a wireless charging coil of the mobile phone 100. The charging management module 140 supplies power to the electronic device through the power management module 141 while charging the battery 142.

The power management module 141 is configured to connect the battery 142 and the charging management module 140 to the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch. It should be understood that both the antenna 1 and the antenna 2 may be an antenna array, that is, an antenna array including a plurality of antennas. The antenna array may be a linear array, a planar array, or a distributed array.

The mobile communication module 150 may provide a solution to wireless communication that includes 2G/3G/4G/5G or the like and that is applied to the mobile phone 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 of the mobile phone 100 are coupled, and the antenna 2 and the wireless communication module 160 of the mobile phone 100 are coupled, so that the mobile phone 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 100 may implement an audio function such as music playing or recording by using the audio module 170, the loudspeaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile phone 100 may listen to music or answer a hands-free call through the speaker 170A.

The receiver 170B, also referred to as an "earpiece", is configured to convert an audio electrical signal into a sound signal. When a call is answered or a voice message is received by using the mobile phone 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone 100. In some other embodiments, two microphones 170C may be disposed in the mobile phone 100, to collect a sound signal and further implement a noise reduction function. In some other embodiments, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines pressure intensity based on a capacitance change. When a touch operation is performed on the display 194, the mobile phone 100 detects touch operation intensity by using the pressure sensor 180A. The mobile phone 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The gyroscope sensor 180B may be configured to determine a motion posture of the mobile phone 100. In some embodiments, the gyroscope sensor 180B may be used to determine angular velocities of the mobile phone 100 around three axes (namely, x, y, and z axes). The gyroscope sensor 180B may be configured to implement image stabilization during photographing. For example, when a shutter is pressed, the gyroscope sensor 180B detects an angle at which the mobile phone 100 shakes, obtains, through calculation based on the angle, a distance for which a lens module needs to compensate, and allows a lens to cancel the shake of the mobile phone 100 through reverse motion, to implement image stabilization. The gyroscope sensor 180B may also be used in a navigation scenario and a somatic game scenario. It should be understood that, in this specification, the motion sensor may include the gyroscope sensor 180B.

The barometric pressure sensor 180C is configured to measure barometric pressure. In some embodiments, the mobile phone 100 calculates an altitude based on a value of the atmospheric pressure measured by the barometric pressure sensor 180C, to assist positioning and navigation.

The magnetic sensor 180D includes a Hall sensor. The mobile phone 100 may detect opening and closing of a flip leather cover by using the magnetic sensor 180D. In some embodiments, when the mobile phone 100 is a flip phone, the mobile phone 100 may detect opening and closing of a flip cover by using the magnetic sensor 180D. Further, a feature such as automatic unlocking of the flip cover is set based on a detected opening or closing state of the leather cover or a detected opening or closing state of the flip cover.

The acceleration sensor 180E may detect a magnitude of acceleration of the mobile phone 100 in various directions (usually on three axes). When the mobile phone 100 is static, a value and a direction of gravity may be detected. The acceleration sensor 180E may be further configured to identify a posture of the electronic device, and is used in an application such as switching between a landscape mode and a portrait mode or a pedometer. It should be understood that, in this specification, the motion sensor may also include the acceleration sensor 180E.

The distance sensor 180F is configured to measure a distance. The mobile phone 100 may measure a distance through infrared or laser. In some embodiments, in a photographing scenario, the mobile phone 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The mobile phone 100 may emit infrared light by using the light-emitting diode. The mobile phone 100 detects reflected infrared light of a nearby object by using the photodiode. When sufficient reflected light is detected, it may be determined that there is an object near the mobile phone 100. When insufficient reflected light is detected, the mobile phone 100 may determine that there is no object near the mobile phone 100. The mobile phone 100 may detect, by using the optical proximity sensor 180G, that the user puts the mobile phone 100 close to an ear for conversation, so that automatic screen-off is implemented to save power. The optical proximity sensor 180G may also be used in a leather cover mode or a pocket mode to automatically perform screen unlocking or locking.

The ambient light sensor 180L is configured to sense ambient light brightness. The mobile phone 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the mobile phone 100 is in a pocket, thereby preventing an accidental touch.

The fingerprint sensor 180H is configured to collect a fingerprint. The mobile phone 100 may implement fingerprint unlock, application lock access, fingerprint photographing, fingerprint-based call answering, and the like by using a feature of the collected fingerprint.

The temperature sensor 180J is configured to detect a temperature. In some embodiments, the mobile phone 100 executes a temperature processing policy based on the temperature detected by the temperature sensor 180J. For example, when the temperature reported by the temperature sensor 180J exceeds a threshold, the mobile phone 100 reduces performance of a processor near the temperature sensor 180J, to reduce power consumption and implement heat protection. In some other embodiments, when the temperature is lower than another threshold, the mobile phone 100 heats the battery 142, to avoid an abnormal shutdown of the mobile phone 100 caused by a low temperature. In some other embodiments, when the temperature is lower than still another threshold, the mobile phone 100 boosts an output voltage of the battery 142, to avoid an abnormal shutdown caused by a low temperature.

The touch sensor 180K is also referred to as a "touch panel". The touch sensor 180K may be disposed in the display 194, and the touch sensor 180K and the display 194 constitute a touchscreen which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the mobile phone 100, and is located on a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the mobile phone 100. The mobile phone 100 may support one or N SIM card interfaces, where N is a positive integer greater than 1. The SIM card interface 195 may support a nano SIM card, a micro SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The mobile phone 100 interacts with a network by using the SIM card, to implement functions such as calling and data communication. In some embodiments, the mobile phone 100 uses an eSIM, namely, an embedded SIM card. The eSIM card may be embedded in the mobile phone 100, and cannot be separated from the mobile phone 100.

The mobile phone 100 implements a display function by using a GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1.

The mobile phone 100 may implement a photographing function by using the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. In this embodiment of this application, the camera 193 includes an electromagnetic sensor, and may further include an optical camera. The electromagnetic sensor, also referred to as the electromagnetic sensor, is configured to perform imaging on a non-line-of-sight object in an active electromagnetic imaging manner or a passive electromagnetic imaging manner. For example, the electromagnetic sensor sends an electromagnetic wave to the target imaging object by using a transmitter, receives an echo signal from the target imaging object by using a receiver, converts the echo signal into an electrical signal, and then transmits the electrical signal to the ISP to convert the electrical signal into a digital image signal. The ISP outputs the digital image signal to the DSP for processing, for example, extracts a target feature of the target imaging object, and finally converts the digital image signal into an image signal. For another example, the electromagnetic sensor collects radiation energy of the target imaging object, converts the collected radiation energy into an electrical signal, and then transmits the electrical signal to the ISP to convert the electrical signal into a digital image signal. The ISP outputs the digital image signal to the DSP for processing, for example, extracts a target feature of the target imaging object, and finally converts the digital image signal into an image signal.

An object generates an optical image by using a lens of the optical camera and projects the optical image to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

The digital signal processor is configured to process a digital signal, and may process another digital signal in addition to the digital image signal. For example, when the mobile phone 100 selects a frequency, the digital signal processor is configured to perform Fourier transform on frequency energy, and the like.

The video codec is configured to compress or decompress a digital video. The mobile phone 100 may support one or more video codecs. In this way, the mobile phone 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the mobile phone 100 may be implemented by using the NPU, for example, image recognition, facial recognition, speech recognition, and text understanding.

The external memory interface 120 may be configured to connect to an external storage card, for example, a Micro SD card, to extend a storage capability of the mobile phone 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the mobile phone 100. The internal memory 121 may include a program storage area and a data storage area. The program storage area may store an operating system, an application required by at least one function (for example, a voice playing function or an image playing function), and the like. The data storage area may store data (such as audio data and a phone book) and the like created during use of the mobile phone 100. In addition, the internal memory 121 may include a high-speed random access memory, or may include a nonvolatile memory, for example, at least one magnetic disk storage device, a flash storage device, or a universal flash storage (universal flash storage, UFS).

The internal memory 121 may further store software code of a non-line-of-sight object photographing method provided in this embodiment of this application. When the processor 110 runs the software code, procedure steps of the non-line-of-sight object photographing method are performed, so that imaging of the non-line-of-sight object can be implemented, it can also determine a location of space in which the non-line-of-sight object is located.

The internal memory 121 may further store a photographed image.

The external memory interface 120 may be configured to connect to an external storage card, for example, a Micro SD card, to extend a storage capability of the mobile phone 100. The external storage card communicates with the processor 110 through the external memory interface 120, to implement a data storage function. For example, files such as music and videos are stored in the external storage card.

Certainly, software code of the non-line-of-sight object photographing method provided in this embodiment of this application may also be stored in an external memory. The processor 110 may run the software code by using the external memory interface 120, to perform procedure steps of the non-line-of-sight object photographing method, so as to implement imaging of the non-line-of-sight object. The image photographed by the mobile phone 100 may also be stored in an external memory.

It should be understood that a user may specify whether to store an image in the internal memory 121 or the external memory. For example, when the mobile phone 100 is currently connected to the external memory, if the mobile phone 100 photographs an image, prompt information may pop up to indicate the user to determine whether to store the image in the external memory or the internal memory 121. Certainly, there is another specifying manner, and this is not limited in this embodiment of this application. Alternatively, when detecting that a memory amount of the internal memory 121 is less than a preset amount, the mobile phone 100 may automatically store an image in the external memory.

It should be understood that, in this embodiment of this application, an example in which the electronic device is the mobile phone 100 is used, but a form of the electronic device is not limited. For example, the electronic device may be a vehicle-mounted device, and may include a laser radar, a millimeter-wave radar, or the like. An illustrated structure in this embodiment of this application does not constitute a specific limitation on the mobile phone 100. In some other embodiments of this application, the mobile phone 100 may include more components than those shown in the figure, for example, include a laser radar or a millimeter-wave radar, or may include fewer components than those shown in the figure, or combine some components, or split some components, or have a different component arrangement. The components shown in the figure may be implemented by hardware, software, or a combination of software and hardware.

An example in which embodiments of this application are applied to the foregoing mobile phone 100 is used below to describe in detail the solutions provided in embodiments of this application by using several examples of a process in which the mobile phone 100 obtains an image of a non-line-of-sight object through photographing. It should be noted that an image processing process provided in the following embodiment may be applied to an image in any format, for example, an uncompressed image format, for example, a BMP format. That is, the image processing process such as an image fusion process in the following description may be applied to an image in a BMP format. For another example, an image processing process provided in the following embodiment may be further applied to a compressed image format, for example, a JPEG format, a JPG format, a GIF format, or a PNG format. That is, the image processing process such as an image fusion process in the following description may be applied to an image in a JPEG format, a JPG format, a GIF format, a PNG format, or the like. For another example, for a compressed image format, the mobile phone 100 may decompress these images, and then perform the image processing process provided in the following embodiment on the decompressed images.

A preview image in this embodiment of this application is an image displayed on a viewfinder screen of an electronic device. For example, when the electronic device is the mobile phone 100, the mobile phone 100 starts a camera application, starts a camera, and displays a viewfinder screen. A preview image is displayed on the viewfinder screen. The mobile phone 100 is still used as an example. When the mobile phone 100 enables a video call function, the mobile phone 100 starts a camera, and displays a viewfinder screen. A preview image is displayed on the viewfinder screen.

In this embodiment of this application, the camera application of the mobile phone 100 is used as an example. However, this embodiment of this application is not limited to the camera application. For example, the camera application may be another application on the mobile phone 100. For example, the application is started, and the non-line-of-sight object may be imaged by default.

Example 1: The mobile phone 100 photographs an image at a single angle of view.

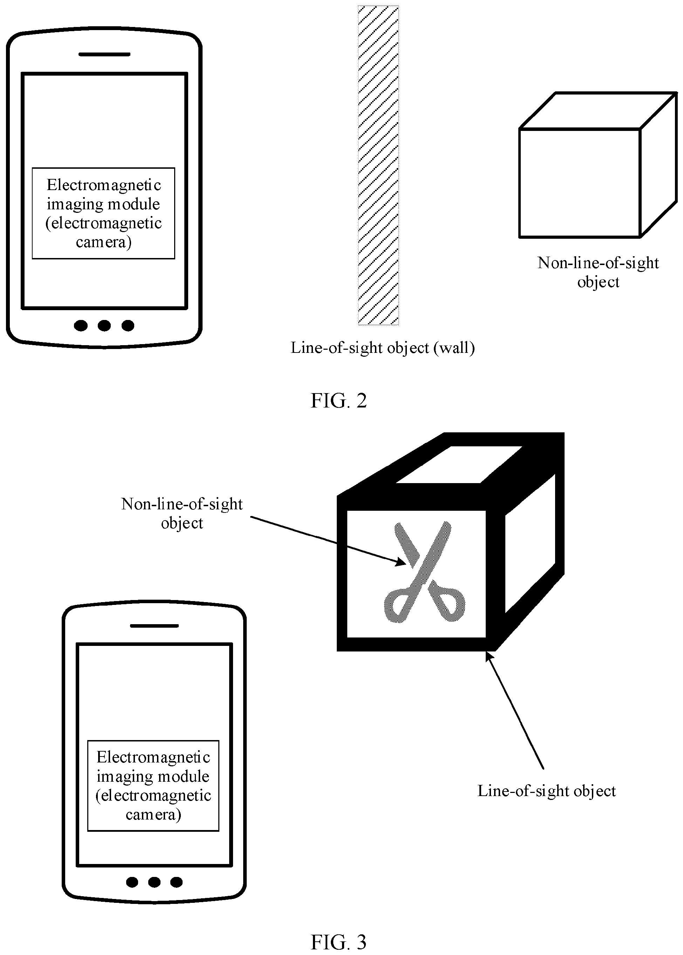

FIG. 2 is an example of an application scenario according to an embodiment of this application. As shown in FIG. 2, a target imaging object (for example, a box) is blocked by an obstruction (a wall). In this case, the target imaging object, that is, the box, may be considered as a non-line-of-sight object, and the wall may be considered as a line-of-sight object. FIG. 3 is an example of another application scenario according to an embodiment of this application. As shown in FIG. 3, a target imaging object (for example, scissors) is blocked by an obstruction (a box). In this case, the target imaging object, that is, the scissors, may be considered as a non-line-of-sight object, and the box is a line-of-sight object.

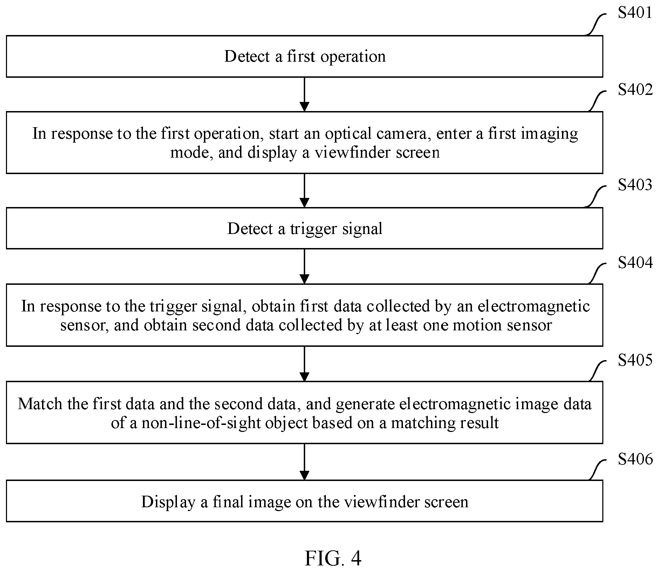

The following uses the scenario in FIG. 3 as an example to describe a process of photographing a non-line-of-sight object by the mobile phone 100. FIG. 4 is a schematic flowchart of photographing an image of the non-line-of-sight object by the mobile phone 100. It should be understood that the mobile phone 100 includes at least one motion sensor, for example, a gyroscope sensor 180B and/or an acceleration sensor 180E, or the at least one motion sensor may include an optical camera. The mobile phone 100 further includes at least one electromagnetic sensor. For example, the at least one electromagnetic sensor may be an antenna used for communication on the mobile phone 100, or may be an antenna used for communication independent of the mobile phone 100. As shown in FIG. 4, the photographing process includes the following steps.

S401: Detect a first operation.

For example, the display 194 of the mobile phone 100 displays a home screen. The home screen includes icons of application programs (for example, a camera application icon and a WeChat application icon). A user detects the first operation of the user on the display 194 by using the touch sensor 180K disposed in the display 194. The first operation may be an operation of tapping the camera application icon on the home screen. Certainly, the first operation may alternatively be another operation, for example, an operation of swiping up on a lock screen interface or an operation of pressing and holding a volume button, provided that the first operation is an operation of capable of starting a camera. This is not limited in this embodiment of this application.

S402: In response to the first operation, start an optical camera, enter a first imaging mode, and display a viewfinder screen.

The mobile phone 100 provided in this embodiment of this application may photograph a visible object such as a portrait, or may photograph a non-line-of-sight object. It should be understood that the portrait is relative to the non-line-of-sight object, that is, the mobile phone 100 supports at least two imaging modes.

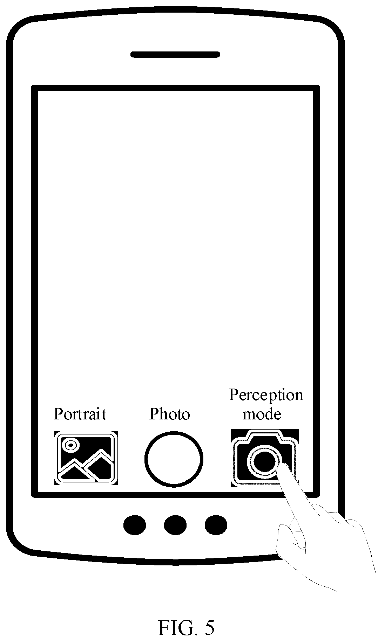

For example, FIG. 5 is a schematic diagram of a camera display interface. It can be seen from FIG. 5 that the camera display interface includes icons of a plurality of imaging modes (for example, a portrait icon and a non-line-of-sight object icon). A "portrait" imaging mode may also be understood as an optical imaging mode. Correspondingly, a "non-line-of-sight object" imaging mode may also be understood as an electromagnetic imaging mode. It should be understood that, in this embodiment of this application, the portrait icon and the non-line-of-sight object icon are merely used as an example for distinguishing between optical imaging and electromagnetic imaging. Compared with optical imaging, electromagnetic imaging is more capable of perceiving a target imaging object. From this perspective, it may be considered that optical imaging corresponds to a "photo" imaging mode (also referred to as a photo mode), and electromagnetic imaging may correspond to a "perception" imaging mode (also referred to as a perception mode). For ease of description, the following describes an example in which optical imaging corresponds to the photo mode and electromagnetic imaging corresponds to the perception mode. It should be understood that the first imaging mode may be the photo mode, or may be the perception mode (this is used as an example in FIG. 5).

S403: Detect a trigger signal.

A second operation is performed by the user on the display 194. The second operation may be an operation of tapping the non-line-of-sight object icon on the camera display interface. The mobile phone 100 detects the second operation by using the touch sensor 180K disposed in the display 194. Certainly, the second operation may alternatively be another operation, for example, an operation of swiping up on the camera display interface or an operation of pressing and holding a volume button, provided that the second operation is an operation capable of entering the first imaging mode. This is not limited in this embodiment of this application.

It should be noted that, in this embodiment of this application, that the electronic device is the mobile phone 100 is used as an example. If the electronic device is another device without a display, the user may also perform an operation on the electronic device. In this case, the electronic device generates a trigger signal, to trigger the electronic device to enter the first imaging mode. It should be understood that the user performs, on the display 194, the operation capable of entering the first imaging mode. In this case, the mobile phone 100 generates a trigger signal. From this perspective, it may also be considered that the mobile phone 100 detects the trigger signal by using the touch sensor 180K disposed in the display 194.

For another example, the camera display interface includes an imaging mode option control. When detecting an operation on the control, the mobile phone 100 displays a check box including a plurality of imaging modes, including a "photo" option, a "perception" option, and the like. When detecting an operation on the "photo" option or the "perception" option, the mobile phone 100 enters the first imaging mode. For ease of description, the following uses an example in which the first imaging mode is the "perception" imaging mode, namely, the electromagnetic imaging mode.

The foregoing provides only two manners in which the user manually sets the mobile phone 100 to enter the first imaging mode. In actual application, the mobile phone 100 may enter the first imaging mode in another manual manner. For example, the camera display interface includes a preview image, the preview image includes an electromagnetic image. The user may manually select the electromagnetic image, that is, an operation is performed on the electromagnetic image. If the user performs an operation on the electromagnetic image, it may be considered that the user manually selects to enter the first imaging mode. Examples are not enumerated in this embodiment of this application.

It should be understood that, if the user performs an operation on the preview image, the mobile phone 100 needs to start the optical camera. In some embodiments, in response to the first operation, the mobile phone 100 starts the camera application, and starts the optical camera. However, if the first imaging mode is the "perception" mode, the mobile phone 100 further needs to start the electromagnetic sensor. In some embodiments, the mobile phone 100 detects the first operation, for example, the operation of tapping the camera application icon on the home screen, to start the optical camera, and then detects the second operation, for example, an operation of tapping a "perception" icon on the camera display interface, to start the electromagnetic sensor. Otherwise, the mobile phone 100 does not start the electromagnetic sensor, to reduce energy consumption of the mobile phone 100 as much as possible. Certainly, in some other embodiments, the mobile phone 100 detects the first operation, for example, the operation of tapping the camera application icon on the home screen, to start the optical camera and the electromagnetic sensor. It should be noted that, if the electromagnetic sensor reuses the antenna used for communication in the electronic device, the electromagnetic sensor is always started by default.

After entering the first imaging mode, the mobile phone 100 displays a viewfinder screen. The target imaging object may not be in the viewfinder screen. Therefore, the user may adjust a relative location of the mobile phone 100 to the target imaging object, so that the target imaging object is in the viewfinder screen, to ensure that the mobile phone 100 can collect an image of the target imaging object.

Then, when needing to photograph the target imaging object, the user may trigger the mobile phone 100 to photograph the target imaging object. For example, the mobile phone 100 may detect a third operation of the user on the display 194 by using the touch sensor 180K disposed in the display 194. The third operation may be an operation of tapping a photographing icon on the camera display interface. Certainly, the third operation may alternatively be another operation, for example, an operation of swiping up on a viewfinder display interface or an operation of pressing and holding a volume button, provided that the third operation is an operation capable of triggering photographing. This is not limited in this embodiment of this application. Alternatively, after the mobile phone 100 enters the first imaging mode, if the mobile phone 100 detects that the target imaging object is located in the viewfinder screen, the mobile phone 100 may automatically trigger photographing of the target imaging object.

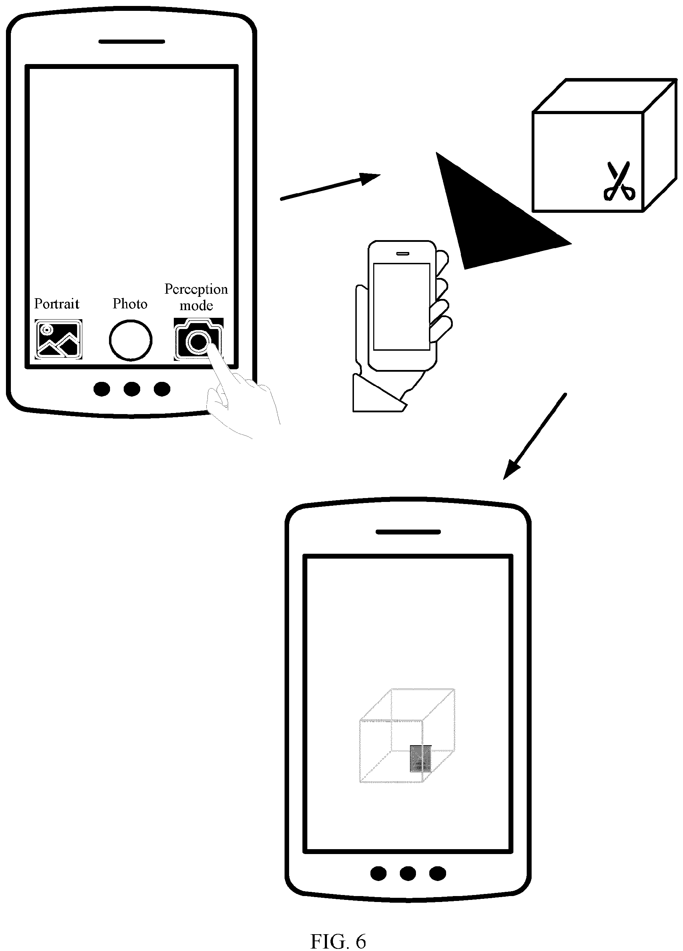

Then, the electromagnetic sensor of the mobile phone 100 may collect a plurality of pieces of first data from the non-line-of-sight object. It should be understood that, if the mobile phone 100 supports active electromagnetic imaging, the mobile phone 100 transmits an electromagnetic wave through an antenna, to irradiate a to-be-imaged space area (it should be understood that the line-of-sight object and the non-line-of-sight object are located in the space area), as shown in FIG. 6. The line-of-sight object and the non-line-of-sight object receive the electromagnetic wave, and reflect the received electromagnetic wave to the electromagnetic sensor, that is, the electromagnetic sensor receives an echo signal. Then, the electromagnetic sensor may extract radiation information of the echo signal, and perform imaging of the non-line-of-sight object based on the radiation information. It should be understood that the radiation information of the echo signal may include electromagnetic radiation information of the line-of-sight object and the non-line-of-sight object. Distribution of the line-of-sight object and the non-line-of-sight object in space, that is, distribution of location points of the line-of-sight object and the non-line-of-sight object in space, may be determined based on the electromagnetic radiation information. It should be noted that the first data may be the echo signal, or may be the radiation information of the echo signal, for example, energy of the echo signal.

If the mobile phone 100 supports passive electromagnetic imaging, the mobile phone 100 obtains radiation information in to-be-imaged space through the antenna, and implements imaging based on a difference between radiation intensities of different objects (the line-of-sight object and the non-line-of-sight object). It should be understood that, in this case, the first data is data indicating the radiation intensity.

In this embodiment of this application, a large antenna array may be virtualized by moving the mobile phone 100. Therefore, after triggering imaging of the non-line-of-sight object, the user may move the mobile phone 100. It should be understood that, when the mobile phone 100 moves, the first data collected by the electromagnetic sensor varies with different locations. To ensure that the first data can better match a motion track of the mobile phone, the mobile phone 100 may display auxiliary prompt information on the viewfinder screen before the electromagnetic sensor collects the first data. The auxiliary prompt information may indicate the user how to move the electronic device, that is, a rule that the electronic device needs to follow when being moved. For example, the mobile phone 100 may be moved along a length direction of the mobile phone 100 or along a width direction of the mobile phone 100. In this case, the auxiliary prompt information may be a straight line along a direction. For another example, the auxiliary prompt information may be a curve or a rotation angle. The user may move the mobile phone 100 according to a track indicated by the auxiliary prompt information.

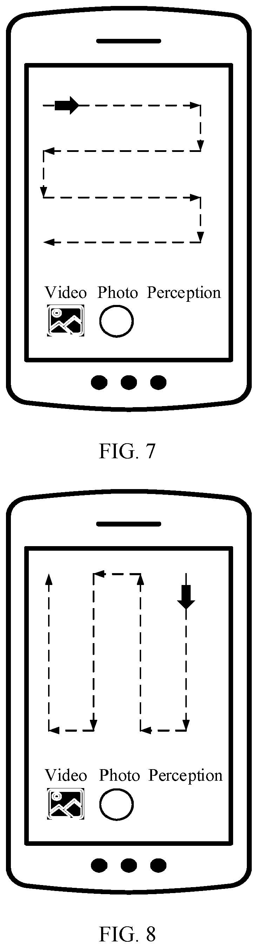

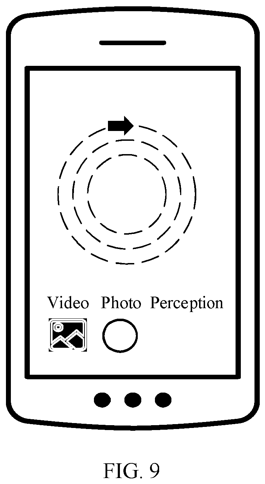

In a possible design, the auxiliary prompt information may include a pattern of the motion track of the mobile phone 100. For example, FIG. 7 is an example of one type of auxiliary prompt information. For another example, FIG. 8 is an example of another type of auxiliary prompt information. For still another example, FIG. 9 is an example of another type of auxiliary prompt information. It should be understood that FIG. 7 to FIG. 9 are merely examples, and a specific form of the pattern that is of the motion track of the mobile phone 100 and that is included in the auxiliary prompt information is not limited in this embodiment of this application.

It should be understood that the auxiliary prompt information may include a plurality of patterns of the motion track of the mobile phone 100. In this way, the user may select, based on a non-line-of-sight object and/or a line-of-sight object that are actually to be imaged, a pattern to be used, so as to obtain a complete image of the non-line-of-sight object as much as possible.

In some embodiments, the camera display interface may include an "auxiliary prompt information" option control. When detecting an operation on the control, the mobile phone 100 displays a check box including a plurality of types of "auxiliary prompt information", including a "scanning pattern 1" option, a "scanning pattern 2" option, and the like. When detecting an operation on the "scanning pattern 1" option, the mobile phone 100 displays a scanning pattern 1 on the display interface.

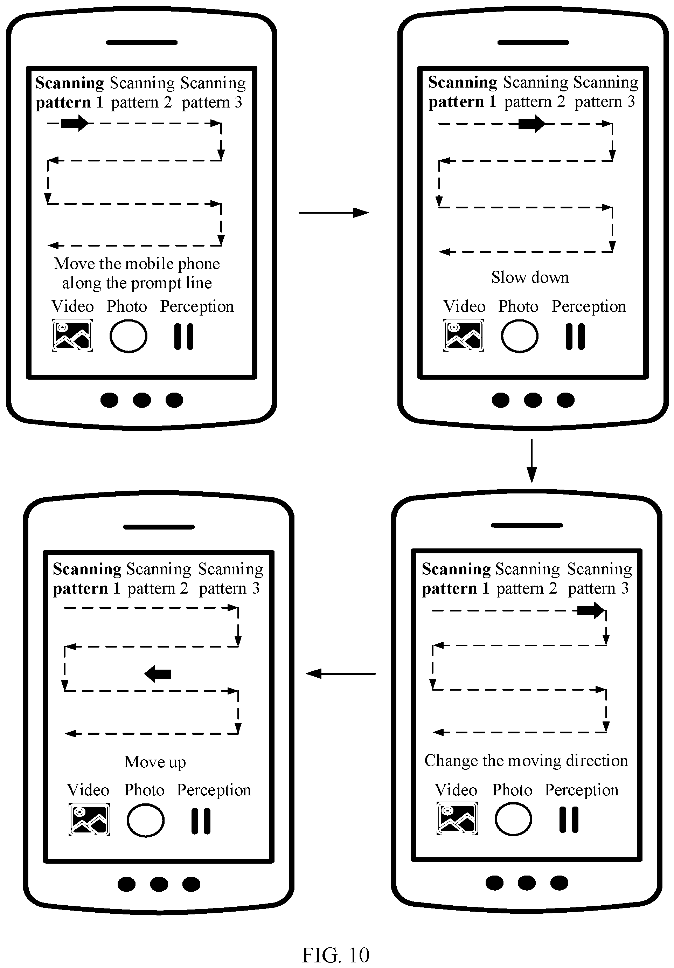

Alternatively, the camera display interface may display icons of the plurality of types of "auxiliary prompt information". For example, FIG. 10 is a schematic diagram of the display interface. The camera display interface may display a "scanning pattern 1" icon, a "scanning pattern 2" icon, the "scanning pattern 2" icon and the like. When detecting an operation on the "scanning pattern 1" option, the mobile phone 100 displays a scanning pattern 1 on the display interface.

It should be understood that, in some embodiments, the mobile phone 100 detects the operation of triggering photographing, namely, the foregoing third operation, and displays, by default, the scanning pattern 1 on the camera display interface, which may be understood as a first scanning prompt pattern. Then, when an operation, for example, for the "scanning pattern 2" option or the "scanning pattern 2" icon is detected, a second scanning prompt pattern, that is, a scanning pattern 2, is displayed.

In a possible design, the auxiliary prompt information may further include other prompt information, for example, information used to prompt an excessively high moving speed of the mobile phone 100, or information used to prompt the user that the mobile phone 100 deviates from a direction, so as to ensure imaging performance of the non-line-of-sight object as much as possible.

For example, in a movement process, the mobile phone 100 may obtain a moving speed of the mobile phone 100. It should be understood that the moving speed may be an instantaneous speed, or may be an average speed within preset duration. When the mobile phone 100 determines that the obtained moving speed is greater than a preset threshold, the mobile phone 100 moves fast. In this case, first prompt information may be displayed on the display interface. The first prompt information is used by the user to move the mobile phone 100 at a speed less than the moving speed. As shown in FIG. 10, the first prompt information may be "Slow down" displayed on the display interface. Alternatively, the first prompt information may be an "arrow" in the scanning pattern 1, and a color of the "arrow" is a preset color. Alternatively, the first prompt information may be the scanning pattern 1, and a color of the scanning pattern 1 is a preset color. Alternatively, the first prompt information may be an "arrow" in the scanning pattern 1, and the "arrow" blinks at a preset frequency, and so on. Alternatively, the first prompt information may be a plurality of combinations of the foregoing several types of prompt information. This is not limited in this embodiment of this application.

It should be understood that, when the mobile phone 100 goes beyond a scanning range of the scanning pattern displayed on the display interface, second prompt information may be displayed on the display interface. The second prompt information may prompt the user to change a moving direction of the mobile phone 100. As shown in FIG. 10, the second prompt information may be "Change the moving direction" displayed on the display interface. Alternatively, the second prompt information may be an "arrow" in the scanning pattern 1, and a color of the "arrow" is a preset color. Alternatively, the second prompt information may be the scanning pattern 1, and a color of the scanning pattern 1 is a preset color. Alternatively, the second prompt information may be an "arrow" in the scanning pattern 1, and the "arrow" blinks at a preset frequency, and so on. Alternatively, the second prompt information may be a plurality of combinations of the foregoing several types of prompt information. This is not limited in this embodiment of this application.

It should be understood that when the mobile phone 100 shakes in a movement process, for example, the mobile phone 100 is switched from a landscape mode to a portrait mode, or is switched from a portrait mode to a landscape mode, third prompt information may be displayed on the display interface. The third prompt information may prompt the user to move the mobile phone 100 in a specified direction. As shown in FIG. 10, the third prompt information may be "Move up" displayed on the display interface. Alternatively, the third prompt information is similar to the first prompt information or the second prompt information. Alternatively, the third prompt information may be an "arrow" in the scanning pattern 1, and a color of the "arrow" is a preset color. Details are not described herein again.

S404: In response to the trigger signal, obtain the first data collected by the electromagnetic sensor, and obtain second data collected by the at least one motion sensor.

It should be understood that the first data is an electromagnetic signal collected by the electromagnetic sensor. For example, the first data may be the echo signal, or may be the radiation information of the echo signal, for example, the energy of the echo signal. The at least one motion sensor may include a posture sensor, an acceleration sensor, a gyroscope, and one or a combination of more of the optical camera, a laser radar, a millimeter-wave radar, and the like. The second data may be data that represents a location of the mobile phone 100, for example, may include image information collected by the at least one motion sensor and/or movement information of the electronic device. For example, if the at least one motion sensor includes the optical camera or the laser radar, the second data includes the image information collected by the at least one motion sensor. For example, if the at least one motion sensor includes the posture sensor, the acceleration sensor, the gyroscope, and the like, the second data includes the movement information of the mobile phone 100 collected by the at least one motion sensor.

It should be understood that, in the movement process of the mobile phone 100, the electromagnetic sensor continuously collects the first data of the non-line-of-sight object. Similarly, the at least one motion sensor continuously collects the second data of the mobile phone 100. Within a period of time, the second data collected by the at least one motion sensor may include M pieces of second sampled data. A sampling moment of each piece of second data corresponds to one physical spatial location. Therefore, the mobile phone 100 may determine an actual motion track of the mobile phone 100 based on the M pieces of second sampled data.

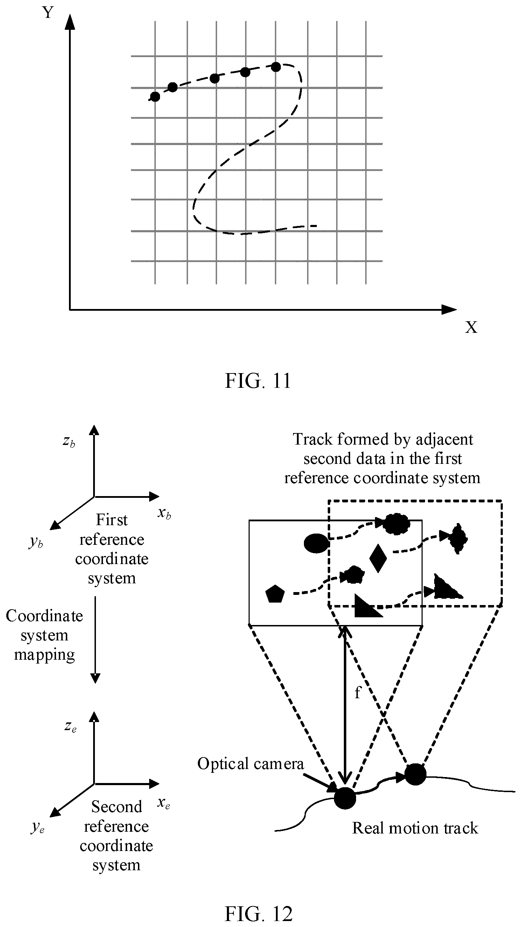

For ease of understanding, FIG. 11 is a schematic diagram of determining the motion track. It should be understood that the motion track of the mobile phone 100 may be a track in a two-dimensional plane, or may be a track in three-dimensional space. For ease of display, FIG. 11 is shown in a two-dimensional plane, and an example in which the motion track of the mobile phone 100 is a curve is used. In FIG. 11, X and Y respectively represent two axes of the two-dimensional plane. For example, X represents a horizontal axis, and Y represents a vertical axis.

It is assumed that accumulated moving duration of the mobile phone 100 is T seconds. Within the T seconds, the second data collected by one motion sensor in the mobile phone 100 may be represented as { *Sₓ, S_{y}, S_{z}* }. Sₓ, S_{y}, and S_{z} respectively represent signals collected by the sensor on an X axis, a Y axis, and a Z axis, and may also be understood as signal values. If a sampling rate of the motion sensor is K₁ Hz, a set of the second data collected by the mobile phone 100 within the T seconds may be represented as: $\left\{\left\{{S}_{x}^{1}, {S}_{y}^{1}, {S}_{z}^{1}\right\},\left\{{S}_{x}^{2}, {S}_{y}^{2}, {S}_{z}^{2}\right\}, … \left\{{S}_{x ,}^{M}{S}_{y}^{M},{S}_{z}^{M}\right\}\right\} ,$ where $M = {K}_{1} * T .$

It should be understood that the set of the second data collected by a plurality of motion sensors within the T seconds is multidimensional, and the motion track of the mobile phone 100 can be restored by integrating the multidimensional second data. For example, the plurality of motion sensors include the acceleration sensor and the gyroscope sensor. The obtained set of the second data that represents a two-dimensional planar track of the mobile phone 100 may be represented as: $\left[\begin{matrix}{P}_{1 , 1} & {P}_{1 , 2} & {P}_{1 , j} \\ {P}_{2 , 1} & {P}_{2 , 2} & {P}_{2 , j} \\ & ⋯ & \\ {P}_{i , 1} & {P}_{i , 2} & {P}_{i , j}\end{matrix}\right]$

*i* rows represent the X axis, j columns represent the Y axis, and P_{*i*,*j*} represents a physical location in space.

The mobile phone 100 may display the motion track of the mobile phone 100 on the display interface. Specifically, the mobile phone 100 may obtain a part or all of the second data from N pieces of second data, and separately calculate location coordinates of any two pieces of adjacent second data in the extracted second data in a first reference coordinate system, to obtain a first motion track. The first reference coordinate system is an intrinsic parameter coordinate system of the motion sensor. It should be understood that, the motion sensor determines, based on the first reference coordinate system, that the motion track of the electronic device may not be an actual motion track of the electronic device. For example, the motion sensor determines, based on the first reference coordinate system, that the electronic device moves leftward, but actually the electronic device moves rightward. Therefore, the mobile phone then maps the first motion track from the first reference coordinate system to a second reference coordinate system, to obtain a second motion track, that is, an actual motion track of the mobile phone 100. It should be understood that the second reference coordinate system is a geodetic coordinate system.

For ease of understanding, FIG. 12 is a schematic diagram of forming a track by two pieces of adjacent second data. FIG. 12 uses an example in which the motion sensor is an optical camera, that is, a motion track of the optical camera is determined. It should be understood that the motion sensor is the optical camera, and the two pieces of adjacent second data are actually two adjacent frames of second data. Each of tiles in different shapes represents a feature point in a photo photographed by the optical camera, that is, a feature point in the second data. The location coordinates of two pieces of adjacent second data in the first reference coordinate system may be separately calculated in the first reference coordinate system, so that the first motion track of the two pieces of adjacent second data in the first reference coordinate system may be obtained. Alternatively, it may be considered that, location coordinates of two adjacent feature points in the photo photographed by the optical camera in the first reference coordinate system may be separately calculated in the first reference coordinate system, so that a first motion track of the two adjacent feature points in the first reference coordinate system may be obtained. An actual motion track of the optical camera, that is, the actual motion track of the mobile phone 100, may be obtained by mapping the first motion track to the second reference coordinate system.

S405: Match the first data and the second data, and generate electromagnetic image data of the non-line-of-sight object based on a matching result.

It should be understood that, in the movement process of the mobile phone 100, the electromagnetic sensor continuously collects the first data of the non-line-of-sight object. Within a period of time, the first data collected by the electromagnetic sensor may include N pieces of first sampled data. A sampling moment of each piece of first data corresponds to one physical spatial location. Because a sampling moment of each piece of second data also corresponds to one physical spatial location, each physical spatial location on the actual motion track of the mobile phone 100 corresponds to one piece of first data and one piece of second data. Therefore, the mobile phone 100 may match the first data and the second data, and may generate the electromagnetic image of the non-line-of-sight object based on the matching result.

The first data and the second data are matched. In other words, the N pieces of first sampled data included in the first data are aligned with the M pieces of second sampled data included in the second data, that is, the N pieces of first sampled data are aligned with the M pieces of second sampled data at a collection moment. It should be understood that when sampling rates of the first data and the second data are the same, that is, N = M, the first data and the second data are naturally aligned. In this case, no alignment operation is required.

When the sampling rates of the first data and the second data are unequal, that is, N is not equal to M, the N pieces of first sampled data may be aligned with the M pieces of second sampled data in a linear difference manner or an extraction manner. For example, M-N pieces of third data are inserted into the N pieces of first sampled data, or N-M pieces of third data are inserted into the M pieces of second sampled data, and then the first data and the second data that are at a same collection moment are aligned. For example, it is assumed that the sampling rate of the first data is K1 Hz, the sampling rate of the second data is K2 Hz, and K1 = 2*K2, N = K1/K2*M. Therefore, one piece of data may be extracted from the N pieces of first sampled data at an interval of K1/K2, so that the N pieces of first sampled data become M pieces of first data, and the M pieces of first data are the same as the second data in quantity, and match the second data one by one. Alternatively, one piece of data is inserted into the M pieces of second sampled data at an interval of K1/K2, so that the M pieces of second sampled data become N pieces of second data. The N pieces of second data are the same as the first data in quantity, and match the first data one by one.

For example, the first data is denoted as *T = Ae^{-jφ}* , where A is an amplitude of the echo signal, *φ* is a phase of the echo signal, the sampling rate of the first data is K₁ Hz, and the moving duration accumulated by the mobile phone 100 is T seconds. A set of first data collected by the mobile phone 100 within T seconds may be represented as: $\left\{{A}_{1}{e}^{- {jφ}_{1}},{A}_{2}{e}^{- {jφ}_{2}}, … {A}_{N}{e}^{- {jφ}_{N}}\right\} ,$ where N = K₁*T.

When K₁ = K₂ and N = M, that is, the quantity of the N pieces of first sampled data is equal to the quantity of the M pieces of second sampled data. When K₁ is not equal to K₂, the N pieces of first sampled data and the M pieces of second sampled data may be matched one by one by using an interpolation method. After the N pieces of first sampled data and the M pieces of second sampled data are matched, the first data may be denoted as: $\left[\begin{matrix}{A}_{1 , 1} {e}^{- {jφ}_{1 , 1}} & {A}_{1 , 2} {e}^{- {jφ}_{1 , 1}} & {A}_{1 , j} {e}^{- {jφ}_{1 , j}} \\ {A}_{2 , 1} {e}^{- {jφ}_{2 , 1}} & {A}_{1 , 2} {e}^{- {jφ}_{2 , 2}} & {A}_{2 , j} {e}^{- {jφ}_{2 , j}} \\ & ⋯ & \\ {A}_{i , 1} {e}^{- {jφ}_{i , 1}} & {A}_{i , 2} {e}^{- {jφ}_{i , 2}} & {A}_{i , j} {e}^{- {jφ}_{i , j}}\end{matrix}\right]$

It is assumed that a data set used for imaging of the non-line-of-sight object is: $\left[\begin{matrix}{E}_{1 , 1} & {E}_{1 , 2} & {E}_{1 , y} \\ {E}_{2 , 1} & {E}_{2 , 2} & {E}_{2 , y} \\ & ⋯ & \\ {E}_{x , 1} & {E}_{x , 2} & {E}_{x , y}\end{matrix}\right]$

In this case, $E \left(x, y\right) = {\sum }_{i = 1}^{I} {\sum }_{j = 1}^{J} {A}_{i , j} {e}^{- {jφ}_{{}_{i , j}}} {e}^{j \frac{2 π}{λ} \left(sinθ cos φ\left(x-i\right)+sinθcosφ\left(y-j\right)+{r}_{i , j}cosθ\right)} Δ x Δ y$, where λ represents a wavelength of the echo signal, *λ*_{*i*,*j*} represents a distance between the mobile phone 100 and the non-line-of-sight object, $tan θ = \frac{\sqrt{{\left(x-i\right)}^{2} + {\left(y-j\right)}^{2}}}{z}$ is used for calculating *θ*, and tan $tan φ = \frac{y - j}{x - i}$ is used for calculating *ψ*.

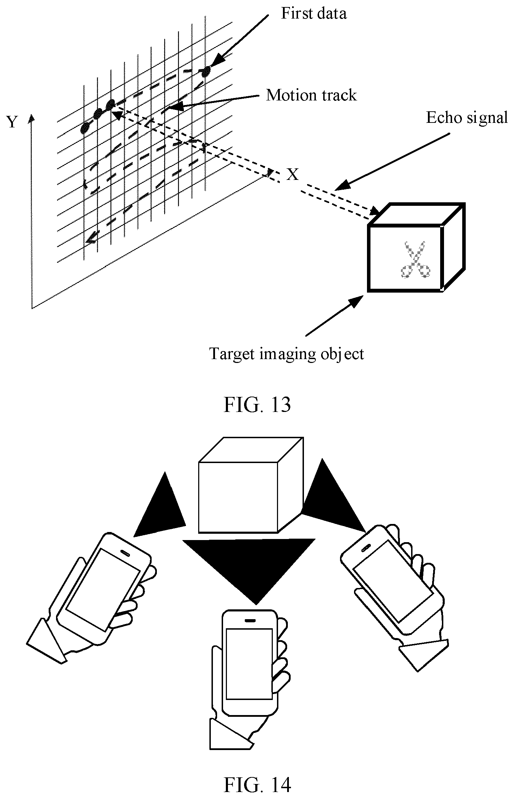

An electromagnetic image data set for imaging of the non-line-of-sight object is output to the mobile phone 100. As shown in FIG. 13, a final image may be obtained.

S406: Display the final image on the viewfinder screen.

The mobile phone 100 may output and generate electromagnetic imaging of the non-line-of-sight object, namely, the final image, to display the final image on the viewfinder screen. It should be noted that when the mobile phone 100 displays the viewfinder screen of the camera application, the electromagnetic sensor may collect an image in real time. The mobile phone 100 may use the foregoing process (specifically, S505) when the electromagnetic sensor collects an image each time, to obtain the final image, and display the final image on the viewfinder screen. In other words, the preview image on the viewfinder screen of the camera application is the image obtained by the mobile phone 100 by performing S505 based on the image collected by the electromagnetic sensor.

It should be noted that, because different scanning patterns correspond to different imaging performance, if imaging effect of the preview image may be poor, the poor imaging effect may be caused by the scanning pattern selected by the user. In this case, the user may not store the final image, but reselect a scanning pattern, to obtain a final image with better imaging performance.

In a possible scenario, for example, in a security check scenario, electromagnetic imaging performed by an existing security check device on the non-line-of-sight object may provide information such as an outline of the non-line-of-sight object for the user, for example, a medicine bottle in a luggage case, but cannot provide composition of a medicine in the medicine bottle, and the user needs to open the medicine bottle to detect the medicine. In this embodiment of this application, in addition to displaying an electromagnetic imaging result of the non-line-of-sight object, the final image may further display material information of the non-line-of-sight object, for example, metal, wood, or liquid, and further, for example, iron, gold, or ethanol. It should be understood that, one display area of the display interface of the mobile phone 100 is used to display the electromagnetic imaging result of the non-line-of-sight object, and the other display area displays the material information. The user does not need to further verify a material of the non-line-of-sight object, thereby improving user experience.

Specifically, after obtaining the first data, the mobile phone 100 may determine a spectrum corresponding to the first data. Because objects of different materials have different reflection and penetration characteristics, the first data received by the mobile phone 100 presents different spectrum curves. The mobile phone 100 may determine the material of the non-line-of-sight object based on the spectrum corresponding to the first data and a correspondence between the spectrum and the material. It should be understood that the mobile phone 100 may store the correspondence between the spectrum and the material, or the mobile phone 100 may notify another device after determining the spectrum corresponding to the first data. The device stores the correspondence between the spectrum and the material, and may determine the material of the non-line-of-sight object. Then, the device notifies the mobile phone 100 of the determined material.

Example 2: The mobile phone 100 photographs an image at a plurality of angle of views.

Because the target imaging object has a large size or the obstruction blocking the target imaging object has a large size, for example, the box shown in FIG. 3 has a large size, but the mobile phone 100 has a limited angle of view of photographing each time, imaging of the non-line-of-sight object cannot be implemented when photographing is performed once. In this case, the mobile phone 100 may photograph the non-line-of-sight object for a plurality of times, and the location of the mobile phone 100 relative to the non-line-of-sight object may be correspondingly adjusted during each photographing, that is, a photographing angle of view of the mobile phone 100 is adjusted, to implement imaging of the non-line-of-sight object.

A difference between Example 2 and Example 1 lies in that after the mobile phone 100 enters the first imaging mode, the third operation in S503 is an operation for instructing multi-angle of view photographing or panoramic imaging. Examples 1 and 2 do not form part of the claimed invention and provided for illustrative purposes only.

In some embodiments, the third operation may be an operation of tapping a multi-angle of view photographing icon or a panoramic imaging icon on the camera display interface. It should be understood that a name of an icon corresponding to the third operation, for example, the multi-angle of view photographing icon and the panoramic imaging icon, is not limited in this embodiment of this application. Certainly, the third operation may alternatively be another operation, for example, an operation of swiping down on the viewfinder display interface or an operation of pressing and holding the volume button, to instruct multi-angle of view photographing. The third operation is not limited in this embodiment of this application. It should be understood that, when detecting the third operation, the electronic device may start a multi-angle of view mode, that is, a mode in which the non-line-of-sight object is photographed at a plurality of angle of views.

It should be understood that, after entering the multi-angle of view mode, the mobile phone 100 may also display the auxiliary prompt information on the display interface. For details, refer to related descriptions in Example 1. Details are not described herein again. After entering the multi-angle of view mode, the mobile phone 100 photographs the non-line-of-sight object from a plurality of angle of views. This may be understood as that the mobile phone 100 performs two-dimensional scanning on the non-line-of-sight object from various angle of views to obtain two-dimensional electromagnetic images at various angle of views, and then splices the two-dimensional electromagnetic images at various angle of views to obtain a final image.

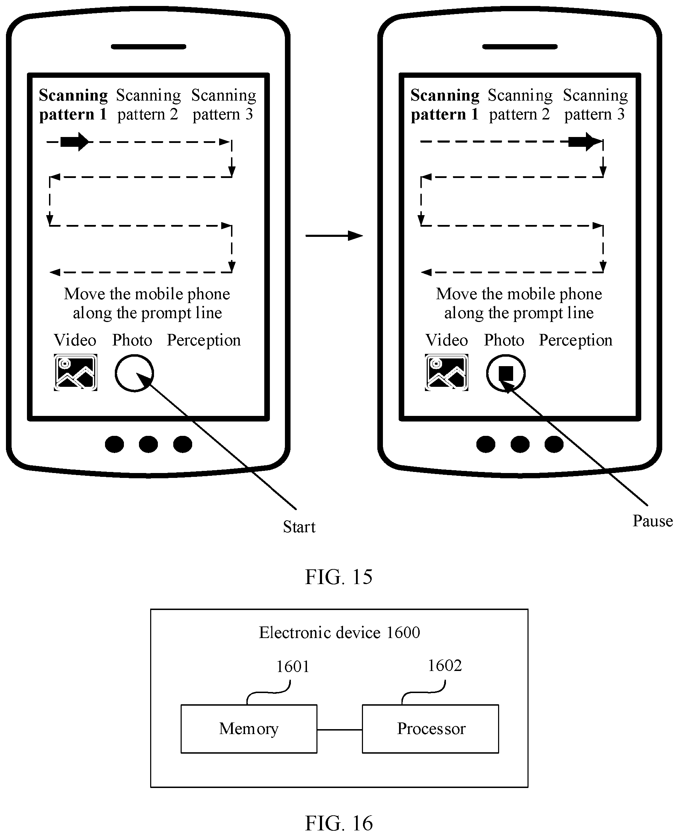

For ease of understanding, FIG. 14 is a schematic diagram of multi-angle of view imaging. In FIG. 14, an example in which the non-line-of-sight object is photographed at three angle of views is used. With reference to FIG. 15, after the display interface of the mobile phone 100 displays the auxiliary prompt information, when the mobile phone 100 detects an entered fourth operation, for example, an operation of tapping the photographing icon on the camera display interface, the mobile phone 100 collects first data by using the electromagnetic sensor, collects second data by using the at least one motion sensor, and stops collecting the first data by using the electromagnetic sensor and/or stops collecting the second data by using the at least one motion sensor until an entered fifth operation, for example, an operation of tapping a "pause" icon on the camera display interface, is detected. It should be understood that, from the fourth operation to the fifth operation, the mobile phone 100 completes photographing at one angle of view.

Then, the mobile phone 100 moves to a second angle of view, and the mobile phone 100 detects an entered sixth operation, for example, an operation of tapping a "start" icon on the camera display interface. The mobile phone 100 collects first data by using the electromagnetic sensor, collects second data by using the at least one motion sensor, stops collecting the first data by using the electromagnetic sensor and/or stops collecting the second data by using the at least one motion sensor until an entered seventh operation, for example, an operation of tapping the "pause" icon on the camera display interface, is detected. That is, the mobile phone 100 completes photographing at the second angle of view. That the mobile phone 100 completes photographing at a third angle of view is similar to that the mobile phone 100 completes photographing from at second angle of view. Details are not described herein again. It should be noted that the "pause" icon and the "start" icon may be a same icon, and a difference lies in that specific styles of the icons are different. For another example, the mobile phone 100 may intermittently move, that is, the mobile phone 100 changes from a static state to a motion state, changes from the motion state to the static state, then changes from the static state to the motion state, and so on. In this case, if the mobile phone 100 detects that the mobile phone 100 changes from the static state to the motion state, the mobile phone 100 starts to collect the first data by using the electromagnetic sensor, and collects the second data by using the at least one motion sensor. If the mobile phone 100 detects that the mobile phone 100 changes from the motion state to the static state, the mobile phone 100 stops collecting the first data by using the electromagnetic sensor and/or stops collecting the second data by using the at least one motion sensor. By analogy, the mobile phone 100 may obtain images at a plurality of angle of views.

It should be understood that the mobile phone 100 obtains an electromagnetic image at one angle of view each time, the mobile phone 100 may store the electromagnetic image, that is, store an electromagnetic image of the non-line-of-sight object at each angle of view. Then, the mobile phone 100 may splice electromagnetic images at a plurality of angle of views to obtain a final image. Specifically, for example, images at four angle of views are included. The images at the four angle of views are respectively a first electromagnetic image at a first angle of view, a second electromagnetic image at a second angle of view, a third electromagnetic image at a third angle of view, and a fourth electromagnetic image at a fourth angle of view. The mobile phone 100 may sequentially splice the first electromagnetic image, the second electromagnetic image, the third electromagnetic image, and the fourth electromagnetic image. For example, the mobile phone 100 may splice the first electromagnetic image, the second electromagnetic image, the third electromagnetic image, and the fourth electromagnetic image according to a sequence of photographing start moments. Alternatively, the user may select some electromagnetic images from the electromagnetic images at the plurality of angle of views for splicing, to obtain a final image. It should be understood that although the mobile phone 100 stores the electromagnetic images at the plurality of angle of views, the user may select some electromagnetic images from the electromagnetic images at the plurality of angle of views for splicing. Image splicing may be implemented with reference to existing image splicing software, and details are not described herein again.

After displaying the final image, the mobile phone 100 may delete previously stored electromagnetic images of the non-line-of-sight object at various angle of views, to save storage space of the mobile phone 100 as much as possible. For example, the mobile phone 100 may delete, based on an actual requirement of the user, some images from the electromagnetic images of the non-line-of-sight object at various angle of views. For example, there are a plurality of electromagnetic images. When detecting an entered eighth operation, the mobile phone 100 deletes some or all of the plurality of electromagnetic images in response to the eighth operation. In other words, only some electromagnetic images are included based on a requirement of the user, so that the user can conveniently view the electromagnetic image in the future.

According to the non-line-of-sight object imaging method in this embodiment of this application, when a non-line-of-sight object is imaged, an electronic device may be moved. Because movement of the electronic device is equivalent to movement of a first component, a virtual large antenna array is formed. Therefore, a wide beam scanning range can be implemented, thereby improving imaging resolution of electromagnetic imaging. In addition, a wide beam scanning range can be implemented by using a small-sized electronic device. Therefore, imaging of the non-line-of-sight object in a plurality of application scenarios may be implemented by using a portable device. For example, imaging of a large-sized non-line-of-sight object may be implemented by using a mobile phone. For another example, imaging of the non-line-of-sight object, for example, an object blocked by another vehicle, may also be implemented by using a vehicle-mounted device, thereby facilitating driving safety.

In embodiments provided in this application, the method provided in embodiments of this application is executed by the electronic device (the mobile phone 100). To implement functions in the method provided in embodiments of this application, a terminal device may include a hardware structure and/or a software module, to implement the functions in a form of a hardware structure, a software module, or a hardware structure and a software module. Whether a function in the foregoing functions is performed by using the hardware structure, the software module, or the combination of the hardware structure and the software module depends on particular applications and design constraints of the technical solutions.

Based on a same technical idea, this application further provides an electronic device 1600, configured to perform the method provided in the foregoing embodiments of this application. As shown in FIG. 16, the electronic device 1600 may include a memory 1601 and a processor 1602. The memory 1601 is configured to store program instructions, and the processor 1602 is configured to invoke the program instructions stored in the memory 1601, to implement the non-line-of-sight object imaging method in embodiments of this application. For example, if the memory 1601 stores program instructions for performing the non-line-of-sight object imaging method shown in FIG. 4, the processor 1602 invokes the program instructions stored in the memory 1601 for performing the non-line-of-sight object imaging method in FIG. 4, to perform the non-line-of-sight object imaging method shown in FIG. 4.

In this embodiment of this application, the processor 1602 may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in embodiments of this application. The general purpose processor may be a microprocessor, or the processor may be any conventional processor or the like. The steps of the methods disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

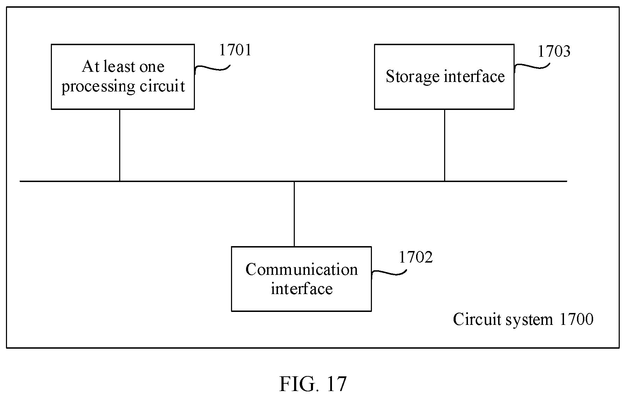

FIG. 17 is a schematic diagram of a structure of a circuit system according to an embodiment of this application. The circuit system may be one or more chips, for example, a system-on-a-chip (system-on-a-chip, SoC). In some embodiments, the circuit system may be a component in an electronic device (for example, the mobile phone 100 shown in FIG. 1). As shown in FIG. 17, the circuit system 1700 may include at least one processing circuit 1701, a communication interface 1702, and a storage interface 1703. In some embodiments, the circuit system 1700 may further include a memory (not shown in the figure) and the like.

The at least one processing circuit 1701 may be configured to perform all or some steps in the embodiment shown in FIG. 4. The at least one processing circuit 1701 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like.

In some embodiments, an example in which an NPU and an ISP are integrated into at least one processing circuit 1701 is used. All or some steps in the embodiment shown in FIG. 5 may be performed by different processing circuits 1701. For example, in the foregoing process, a process (for example, all or some steps in FIG. 4) of matching the first data and the second data may be performed by the NPU, and another process (for example, S405 in the embodiment shown in FIG. 4) may be performed by the ISP.

The communication interface 1702 may be configured to implement communication between the circuit system 1700 and another component/device. For example, the communication interface 1702 may be a wireless communication interface (for example, a Bluetooth communication interface or a wireless communication interface). For example, the circuit system 1700 is a component of the mobile phone 100. The circuit system 1700 may be connected to a wireless communication module 172 and/or a mobile communication module 171 through the communication interface 1702.

The storage interface 1703 is configured to implement data transmission (for example, data reading and writing) between the circuit system 1700 and another component (for example, a memory). For example, the circuit system 1700 is a component of the mobile phone 100. The circuit system 1700 may access, through the storage interface 1703, data stored in the internal memory 121.

It should be noted that, in this embodiment of this application, division into the units is an example, and is merely a logical function division. In actual implementation, another division manner may be used. Functional units in embodiments of the present invention may be integrated into one processing unit, or each of the units may exist alone physically, or two or more units are integrated into one unit. For example, in the foregoing embodiments, a first obtaining unit and a second obtaining unit may be a same unit or different units. The integrated unit may be implemented in a form of hardware, or may be implemented in a form of a software functional unit.

An embodiment of this application further provides a computer-readable storage medium. The storage medium may include a memory. The memory may store a program. When the program is executed, an electronic device is enabled to perform all or some steps recorded in the method embodiment shown in FIG. 4.

An embodiment of this application further provides a computer program product. When the computer program product runs on an electronic device, the electronic device is enabled to perform all or some steps recorded in the method embodiment shown in FIG. 4.

In embodiments of this application, when the functions of the mobile phone 100 are implemented in a form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

According to context, the term "when..." or "after..." used in the foregoing embodiments may be interpreted as a meaning of "if...", "after...", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

The term "and/or" in the foregoing embodiments describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In addition, in the description of embodiments of the present invention, words such as "first" and "second" are merely used for distinction and description, and shall not be understood as an indication or implication of relative importance or an indication or implication of an order.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on the computer, the procedures or functions according to embodiments of the present invention are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

For a purpose of explanation, the foregoing descriptions are described with reference to specific embodiments. However, the foregoing example discussion is not intended to be detailed, and is not intended to limit this application to a disclosed precise form. Based on the foregoing teaching content, many modification forms and variation forms are possible. Embodiments are selected and described to fully illustrate the principles of this application and practical application of the principles, so that other persons skilled in the art can make full use of this application and various embodiments that have various modifications applicable to conceived specific usage. The invention, however, is defined solely by the appended claims.

## Claims

1. A non-line-of-sight object imaging method, applied to an electronic device, wherein the electronic device comprises a first component, a second component and a display interface; and the method comprises:
detecting (S403) a trigger signal;
in response to the trigger signal, obtaining (S404) first data collected by the first component, and obtaining second data collected by the second component, wherein the first data comprises an electromagnetic signal collected by the first component, and the second data comprises image information collected by the second component and/or movement information of the electronic device; and
matching (S405) the first data and the second data, and generating electromagnetic image data of a non-line-of-sight object based on a matching result;
wherein after the detecting a trigger signal, the method further comprises:
displaying auxiliary prompt information on the
display interface, wherein the auxiliary prompt information comprises a first scanning prompt pattern that is used to indicate a moving track to which the electronic device needs to refer when scanning the non-line-of-sight object;
wherein the matching the first data and the second data further comprises:
obtaining N pieces of first sampled data comprised in the first data, and obtaining M pieces of second sampled data comprised in the second data, wherein N is a positive integer, and M is a positive integer; and
matching the first sampled data and the second sampled data that are at a same collection moment;
wherein after the displaying auxiliary prompt information on a display interface, the method further comprises:
obtaining a moving speed of the electronic device; and
if the moving speed is greater than a preset threshold, displaying first prompt information on the display interface, wherein the first prompt information is used by a user to move the electronic device at a speed less than the moving speed.

2. The method according to claim 1, wherein the first component comprises an antenna.

3. The method according to claim 1 or 2, wherein the second component comprises at least one of an optical camera, a motion sensor, a laser radar, and a millimeter-wave radar.

4. The method according to any one of claims 1 to 3, wherein the method further comprises:
extracting a part or all of the second data from the second data;
separately calculating location coordinates of any two pieces of adjacent second data in the part or all of the second data in a first reference coordinate system of the second component, to obtain a first motion track of the electronic device; and
mapping the first motion track from the first reference coordinate system to a second reference coordinate system of the electronic device, to obtain a second motion track.

5. The method according to any one of claims 1 to 4, wherein the electromagnetic image comprises material information, and the material information indicates a material of the non-line-of-sight object.

6. The method according to any one of claims 1 to 5, wherein before the detecting a trigger signal, the method further comprises:
detecting (S401) a first operation; and
starting (S402) the optical camera comprised in the electronic device in response to the first operation.

7. The method according to any of claims 1 to 6, wherein after the displaying auxiliary prompt information on a display interface, the method further comprises:
detecting a second operation; and
displaying a second scanning prompt pattern on the display interface in response to the second operation.

8. An electronic device (1600) arranged to perform the method of any of claims 1 to 7 and comprising a processor (1602), a first component, a second component, and a display interface, wherein
the processor (1602) is configured to detect a trigger signal;
the processor (1602) is configured to: in response to the trigger signal, obtain first data collected by the first component, and obtain second data collected by the second component, wherein the first data comprises an electromagnetic signal collected by the first component, and the second data comprises image information collected by the second component and/or movement information of the electronic device;
the first component is configured to collect the first data;
the second component is configured to collect the second data; and
the processor (1602) is further configured to match N pieces of first sampled data and M pieces of second sampled data, and generate electromagnetic image data of a non-line-of-sight object based on a matching result;
wherein the processor is further configured to: after the detecting a trigger signal, display auxiliary prompt information on the display interface, wherein the auxiliary prompt information comprises a first scanning prompt pattern that is used to indicate a moving track to which the electronic device needs to refer when scanning the non-line-of-sight object;
wherein the processor is further configured to:
obtain N pieces of first sampled data comprised in the first data, and obtain M pieces of second sampled data comprised in the second data, wherein N is a positive integer, and M is a positive integer; and
match the first sampled data and the second sampled data that are at a same collection moment;
wherein the processor is further configured to, after the displaying auxiliary prompt information on a display interface:
obtain a moving speed of the electronic device; and
if the moving speed is greater than a preset threshold, display first prompt information on the display interface, wherein the first prompt information is used by a user to move the electronic device at a speed less than the moving speed.

9. The electronic device according to claim 8, wherein the first component comprises an antenna.

10. The electronic device according to claim 8 or 9, wherein the second component comprises at least one of an optical camera, a motion sensor, a laser radar, and a millimeter-wave radar.

11. A computer-readable storage medium, comprising computer instructions, wherein when the computer instructions are run on an electronic device, the electronic device is enabled to perform the method according to any one of claims 1 to 7.

## Patentansprüche

1. Nicht-Sichtlinien-Objektabbildungsverfahren, angewendet auf eine elektronische Vorrichtung, wobei die elektronische Vorrichtung eine erste Komponente, eine zweite Komponente und eine Anzeigeschnittstelle umfasst und das Verfahren Folgendes umfasst:
Erkennen (S403) eines Triggersignals;
als Reaktion auf das Triggersignal, Erlangen (S404) erster Daten, die durch die erste Komponente erfasst werden, und Erlangen zweiter Daten, die durch die zweite Komponente erfasst werden, wobei die ersten Daten ein elektromagnetisches Signal umfassen, das durch die erste Komponente erfasst wird, und die zweiten Daten Bildinformationen, die durch die zweite Komponente erfasst werden, und/oder Bewegungsinformationen der elektronischen Vorrichtung umfassen; und
Abgleichen (S405) der ersten Daten und der zweiten Daten und Erzeugen elektromagnetischer Bilddaten eines Nicht-Sichtlinien-Objekts basierend auf einem Abgleichergebnis;
wobei das Verfahren nach dem Erkennen eines Triggersignals ferner Folgendes umfasst:
Anzeigen zusätzlicher Aufforderungsinformationen auf der Anzeigeschnittstelle, wobei die zusätzlichen Aufforderungsinformationen ein erstes Abtastaufforderungsmuster umfassen, das dazu verwendet wird, eine Bewegungsbahn anzugeben, auf die sich die elektronische Vorrichtung beim Abtasten des Nicht-Sichtlinien-Objekts zu beziehen hat;
wobei das Abgleichen der ersten Daten und der zweiten Daten ferner Folgendes umfasst:
Erlangen von N Elementen erster Stichprobendaten, die in den ersten Daten umfasst sind, und Erlangen von M Elementen zweiter Stichprobendaten, die in den zweiten Daten umfasst sind, wobei N eine positive Ganzzahl ist und M eine positive Ganzzahl ist; und
Abgleichen der ersten Stichprobendaten und der zweiten Stichprobendaten, die einen gleichen Erfassungszeitpunkt aufweisen;
wobei das Verfahren nach dem Anzeigen zusätzlicher Aufforderungsinformationen auf einer Anzeigeschnittstelle ferner Folgendes umfasst:
Erlangen einer Bewegungsgeschwindigkeit der elektronischen Vorrichtung; und,
wenn die Bewegungsgeschwindigkeit größer als ein voreingestellter Schwellenwert ist, Anzeigen erster Aufforderungsinformationen auf der Anzeigeschnittstelle, wobei die ersten Aufforderungsinformationen durch einen Benutzer dazu verwendet werden, die elektronische Vorrichtung mit einer Geschwindigkeit unterhalb der Bewegungsgeschwindigkeit zu bewegen.

2. Verfahren nach Anspruch 1, wobei die erste Komponente eine Antenne umfasst.

3. Verfahren nach Anspruch 1 oder 2, wobei die zweite Komponente mindestens eines aus einer optischen Kamera, einem Bewegungssensor, einem Laserradar und einem Millimeterwellenradar umfasst.

4. Verfahren nach einem der Ansprüche 1 bis 3, wobei das Verfahren ferner Folgendes umfasst:
Extrahieren eines Teils oder einer Gesamtheit der zweiten Daten aus den zweiten Daten;
separates Berechnen von Positionskoordinaten zweier beliebiger Elemente von benachbarten zweiten Daten in dem Teil oder der Gesamtheit der zweiten Daten in einem ersten Referenzkoordinatensystem der zweiten Komponente, um eine erste Bewegungsbahn der elektronischen Vorrichtung zu erlangen; und Zuordnen der ersten Bewegungsbahn von dem ersten Referenzkoordinatensystem zu einem zweiten Referenzkoordinatensystem der elektronischen Vorrichtung, um eine zweite Bewegungsbahn zu erlangen.

5. Verfahren nach einem der Ansprüche 1 bis 4, wobei das elektromagnetische Bild Materialinformationen umfasst und die Materialinformationen ein Material des Nicht-Sichtlinien-Objekts angeben.

6. Verfahren nach einem der Ansprüche 1 bis 5, wobei das Verfahren vor dem Erkennen eines Triggersignals ferner Folgendes umfasst:
Erkennen (S401) eines ersten Vorgangs; und
Starten (S402) der optischen Kamera, die in der elektronischen Vorrichtung umfasst ist, als Reaktion auf den ersten Vorgang.

7. Verfahren nach einem der Ansprüche 1 bis 6, wobei das Verfahren nach dem Anzeigen zusätzlicher Aufforderungsinformationen auf einer Anzeigeschnittstelle ferner Folgendes umfasst:
Erkennen eines zweiten Vorgangs; und
Anzeigen eines zweiten Abtastaufforderungsmusters auf der Anzeigeschnittstelle als Reaktion auf den zweiten Vorgang.

8. Elektronische Vorrichtung (1600), die dazu eingerichtet ist, das Verfahren nach einem der Ansprüche 1 bis 7 durchzuführen und die einen Prozessor (1602), eine erste Komponente, eine zweite Komponente und eine Anzeigeschnittstelle umfasst, wobei der Prozessor (1602) dazu konfiguriert ist, ein Triggersignal zu erkennen;
der Prozessor (1602) zu Folgendem konfiguriert ist: als Reaktion auf das Triggersignal, Erlangen erster Daten, die durch die erste Komponente erfasst werden, und Erlangen zweiter Daten, die durch die zweite Komponente erfasst werden, wobei die ersten Daten ein elektromagnetisches Signal umfassen, das durch die erste Komponente erfasst wird, und die zweiten Daten Bildinformationen, die durch die zweite Komponente erfasst werden, und/oder Bewegungsinformationen der elektronischen Vorrichtung umfassen;
die erste Komponente dazu konfiguriert ist, die ersten Daten zu erfassen;
die zweite Komponente dazu konfiguriert ist, die zweiten Daten zu erfassen; und
der Prozessor (1602) ferner dazu konfiguriert ist, N Elemente erster Stichprobendaten und M Elemente zweiter Stichprobendaten abzugleichen und elektromagnetische Bilddaten eines Nicht-Sichtlinien-Objekts basierend auf einem Abgleichergebnis zu erzeugen;
wobei der Prozessor ferner zu Folgendem konfiguriert ist: nach dem Erkennen eines Triggersignals, Anzeigen zusätzlicher Aufforderungsinformationen auf der Anzeigeschnittstelle, wobei die zusätzlichen Aufforderungsinformationen ein erstes Abtastaufforderungsmuster umfassen, das dazu verwendet wird, eine Bewegungsbahn anzugeben, auf die sich die elektronische Vorrichtung beim Abtasten des Nicht-Sichtlinien-Objekts zu beziehen hat;
wobei der Prozessor ferner zu Folgendem konfiguriert ist:
Erlangen von N Elementen erster Stichprobendaten, die in den ersten Daten umfasst sind, und Erlangen von M Elementen zweiter Stichprobendaten, die in den zweiten Daten umfasst sind, wobei N eine positive Ganzzahl ist und M eine positive Ganzzahl ist; und
Abgleichen der ersten Stichprobendaten und der zweiten Stichprobendaten, die einen gleichen Erfassungszeitpunkt aufweisen;
wobei der Prozessor nach dem Anzeigen zusätzlicher Aufforderungsinformationen auf einer Anzeigeschnittstelle ferner zu Folgendem konfiguriert ist:
Erlangen einer Bewegungsgeschwindigkeit der elektronischen Vorrichtung; und,
wenn die Bewegungsgeschwindigkeit größer als ein voreingestellter Schwellenwert ist, Anzeigen erster Aufforderungsinformationen auf der Anzeigeschnittstelle, wobei die ersten Aufforderungsinformationen durch einen Benutzer dazu verwendet werden, die elektronische Vorrichtung mit einer Geschwindigkeit unterhalb der Bewegungsgeschwindigkeit zu bewegen.

9. Elektronische Vorrichtung nach Anspruch 8, wobei die erste Komponente eine Antenne umfasst.

10. Elektronische Vorrichtung nach Anspruch 8 oder 9, wobei die zweite Komponente mindestens eines aus einer optischen Kamera, einem Bewegungssensor, einem Laserradar und einem Millimeterwellenradar umfasst.

11. Computerlesbares Speichermedium, umfassend Computeranweisungen, wobei, wenn die Computeranweisungen auf einer elektronischen Vorrichtung ausgeführt werden, die elektronische Vorrichtung in die Lage versetzt wird, das Verfahren nach einem der Ansprüche 1 bis 7 durchzuführen.

## Revendications

1. Procédé d'imagerie d'objet hors ligne de visée, appliqué à un dispositif électronique, dans lequel le dispositif électronique comprend un premier composant, un second composant et une interface d'affichage ; et le procédé comprend :
la détection (S403) d'un signal de déclenchement ;
en réponse au signal de déclenchement, l'obtention (S404) de premières données collectées par le premier composant, et l'obtention de secondes données collectées par le second composant, dans lequel les premières données comprennent un signal électromagnétique collecté par le premier composant, et les secondes données comprennent des informations d'image collectées par le second composant et/ou des informations de mouvement du dispositif électronique ; et
la mise en correspondance (S405) des premières données et des secondes données, et la génération de données d'image électromagnétique d'un objet hors ligne de visée sur la base d'un résultat de correspondance ;
dans lequel, après la détection d'un signal de déclenchement, le procédé comprend en outre :
l'affichage d'informations d'invite auxiliaires sur l'interface d'affichage, dans lequel les informations d'invite auxiliaires comprennent un premier modèle d'invite de balayage utilisé pour indiquer une trajectoire mobile à laquelle le dispositif électronique doit se référer lors du balayage de l'objet hors de la ligne de visée ;
dans lequel la mise en correspondance des premières données et des secondes données comprend en outre :
l'obtention de N éléments de premières données échantillonnées comprises dans les premières données, et l'obtention de M éléments de secondes données échantillonnées comprises dans les secondes données, dans lequel N est un entier positif et M est un entier positif ; et
la correspondance des premières données échantillonnées et des secondes données échantillonnées qui sont au même moment de collecte ;
dans lequel, après l'affichage d'informations d'invite auxiliaires sur une interface d'affichage, le procédé comprend en outre :
l'obtention d'une vitesse de déplacement du dispositif électronique ; et
si la vitesse de déplacement est supérieure à un seuil prédéfini, l'affichage des premières informations d'invite sur l'interface d'affichage, dans lequel les premières informations d'invite sont utilisées par un utilisateur pour déplacer le dispositif électronique à une vitesse inférieure à la vitesse de déplacement.

2. Procédé selon la revendication 1, dans lequel le premier composant comprend une antenne.

3. Procédé selon la revendication 1 ou 2, dans lequel le second composant comprend au moins l'un des éléments suivants : une caméra optique, un capteur de mouvement, un radar laser et un radar à ondes millimétriques.

4. Procédé selon l'une quelconque des revendications 1 à 3, dans lequel le procédé comprend en outre :
l'extraction d'une partie ou de la totalité des secondes données à partir des secondes données ;
le calcul, séparément, des coordonnées de position de deux quelconques éléments de secondes données adjacentes dans la partie ou la totalité des secondes données dans un premier système de coordonnées de référence du second composant, afin d'obtenir une première trajectoire de mouvement du dispositif électronique ; et
le mappage de la première trajectoire de mouvement du premier système de coordonnées de référence vers un second système de coordonnées de référence du dispositif électronique, afin d'obtenir une seconde trajectoire de mouvement.

5. Procédé selon l'une quelconque des revendications 1 à 4, dans lequel l'image électromagnétique comprend des informations matérielles, et les informations matérielles indiquent un matériau de l'objet hors ligne de visée.

6. Procédé selon l'une quelconque des revendications 1 à 5, dans lequel avant la détection d'un signal de déclenchement, le procédé comprend en outre :
la détection (S401) d'une première opération ; et
le démarrage (S402) de la caméra optique comprise dans le dispositif électronique en réponse à la première opération.

7. Procédé selon l'une quelconque des revendications 1 à 6, dans lequel après l'affichage d'une seconde interface d'invite auxiliaire sur une interface d'affichage, le procédé comprend en outre :
la détection d'une seconde opération ; et
l'affichage d'un second modèle d'invite de balayage sur l'interface d'affichage en réponse à la seconde opération.

8. Dispositif électronique (1600) agencé pour réaliser le procédé selon l'une quelconque des revendications 1 à 7 et comprenant un processeur (1602), un premier composant, un second composant et une interface d'affichage, dans lequel
le processeur (1602) est configuré pour détecter un signal de déclenchement ;
le processeur (1602) est configuré pour : en réponse au signal de déclenchement, obtenir de premières données collectées par le premier composant, et obtenir de secondes données collectées par le second composant, dans lequel les premières données comprennent un signal électromagnétique collecté par le premier composant, et les secondes données comprennent des informations d'image collectées par le second composant et/ou des informations de mouvement du dispositif électronique ;
le premier composant est configuré pour collecter les premières données ;
le second composant est configuré pour collecter les secondes données ; et
le processeur (1602) est en outre configuré pour faire correspondre N éléments de premières données échantillonnées et M éléments de secondes données échantillonnées, et générer des données d'image électromagnétique d'un objet hors ligne de visée sur la base d'un résultat de correspondance ;
dans lequel le processeur est en outre configuré pour : après la détection d'un signal de déclenchement, afficher des informations d'invite auxiliaires sur l'interface d'affichage, dans lequel les informations d'invite auxiliaires comprennent un premier modèle d'invite de balayage utilisé pour indiquer une trajectoire mobile à laquelle le dispositif électronique doit se référer lors du balayage de l'objet hors ligne de visée ; dans lequel le processeur est en outre configuré pour :
obtenir N éléments de premières données échantillonnées comprises dans les premières données, et obtenir M éléments de secondes données échantillonnées comprises dans les secondes données, dans lequel N est un entier positif et M est un entier positif ; et
faire correspondre les premières données échantillonnées et les secondes données échantillonnées qui sont au même moment de collecte ;
dans lequel le processeur est en outre configuré pour, après l'affichage d'informations d'invite auxiliaires sur une interface d'affichage :
obtenir une vitesse de déplacement du dispositif électronique ; et
si la vitesse de déplacement est supérieure à un seuil prédéfini, afficher de premières informations d'invite sur l'interface d'affichage, dans lequel les premières informations d'invite sont utilisées par un utilisateur pour déplacer le dispositif électronique à une vitesse inférieure à la vitesse de déplacement.

9. Dispositif électronique selon la revendication 8, dans lequel le premier composant comprend une antenne.

10. Dispositif électronique selon la revendication 8 ou 9, dans lequel le second composant comprend au moins l'un des éléments suivants : une caméra optique, un capteur de mouvement, un radar laser et un radar à ondes millimétriques.

11. Support de stockage lisible par ordinateur, comprenant des instructions informatiques, dans lequel lorsque les instructions informatiques sont exécutées sur un dispositif électronique, le dispositif électronique est en mesure de réaliser le procédé selon l'une quelconque des revendications 1 à 7.
